Europäisches Patentamt

European Patent Office

Office européen des brevets

(19)

(11) Veröffentlichungsnummer: **0 149 996**
A2

(12) # EUROPÄISCHE PATENTANMELDUNG

(21) Anmeldenummer: 85100059.6

(22) Anmeldetag: 03.01.85

(51) Int. Cl.⁴: **A 46 D 3/04**
A 46 D 3/00
//A46B3'06

(30) Priorität: 10.01.84 DE 3400510
13.02.84 DE 3405001

(43) Veröffentlichungstag der Anmeldung:
31.07.85 Patentblatt 85/31

(84) Benannte Vertragsstaaten:
BE DE FR GB IT SE

(71) Anmelder: Schlesinger GmbH & Co. Maschinenbau KG
Industriehof
D-3559 Burgwald 1(DE)

(72) Erfinder: Bickel, Wolfgang
Albert-Schweizer-Strasse 19
D-6149 Rimbach 3(DE)

(74) Vertreter: Schlee, Richard et al,
Patentanwälte Dipl.-Ing. R. Schlee Dipl.-Ing. A. Missling
Bismarckstrasse 43
D-6300 Giessen 1(DE)

(54) **Verfahren und Maschine zum Herstellen von Bürsten.**

(57) Borstenbündel (9) werden vor dem Transport zu einem Bürstenkörper (7) dadurch hergestellt, daß die einzelnen Borsten miteinander verbunden werden. So vorbereitete Borstenbündel (9) werden in einem Verteilerblock (2) auf viele Rohrleitungen (3) verteilt, die zu einem Borstenbündelhalter (4) führen, der die Borstenbündel (9) in einer gewünschten Richtung relativ zum Bürstenkörper (7) festhält. Die Borstenbündel (9) und der Bürstenkörper (7) werden durch Andrücken aneinander miteinander verschweißt, wobei sowohl die Borstenbündel (9) als auch der Bürstenkörper (7) an den Verschweißungsstellen plastifiziert sind.

Durch die Vorbereitung fertiger Borstenbündel (9) können diese über beliebig lange Rohrleitungen (3) geführt werden, so daß sie in jeder beliebigen Richtung an den Bürstenkörper (7) herangeführt werden können, was die Herstellung aller Bürstenformen ermöglicht.

FIG. I

Patentanwälte

Dipl.-Ing. Richard Schlee
Dipl.-Ing. Arne Missling

6300 Lahn-Giessen 1    14.11.1984
Bismarckstrasse 43
Telefon: (0641) 71019

0149996

S/B

— 1 —

SCHLESINGER GmbH & Co. Maschinenbau KG, Industriehof,
3559 Burgwald 1

Verfahren und Maschine zum Herstellen von Bürsten

Beschreibung:

Die Erfindung bezieht sich auf ein Verfahren zum Herstellen von Bürsten, bei dem viele Borstenbündel, vorzugsweise alle Borstenbündel der Bürste zunächst durch Führungskanäle in eine bestimmte Lage relativ zu einem Bürstenkörper transportiert und anschließend daran gleichzeitig mit einem ihrer Enden (Verbindungsenden) mit dem Bürstenkörper verbunden werden.

Zur Klarstellung sei bemerkt, daß im vorliegenden Zusammenhang unter Bürsten alle Gegenstände verstanden werden sollen, die einen Körper haben, der mit Borsten besetzt ist, wobei es auf die Größe nicht ankommt. Unter Bürsten werden also im vorliegenden Zusammenhang sowohl sehr kleine Bürsten, wie z.B. Zahnbürsten, als auch große Besen, z.B. Straßenbesen, verstanden.

Bei der klassischen Bürstenherstellung werden Borsten mittels eines Abteilers aus einem Magazin entnommen, in einem Stopfwerkzeug gefaltet und mittels Draht in vor-

0149996

gebohrten Löchern von relativ dickwandigen Bürstenkörpern befestigt. Hierzu werden Maschinen verwendet (DE-PS 1 114 462), mit denen Bürstenkörper in verschiedenen Stellungen gedreht werden können, um Bohrungen mit beliebigen Richtungen anbringen und in diese Borstenbündeln mittels Draht einsetzen zu können. Anschließend werden die freien Borstenenden abgeschert und ausgeputzt. Maschinen dieser Art werden zur Steigerung der Leistung als Zwillingsautomaten hergestellt, auf denen alle vier Arbeitsgänge (Bohren, Stopfen, Abscheren, Ausputzen) gleichzeitig zweimal ausgeführt werden.

Die Arbeitsgeschwindigkeit solcher Maschinen ist begrenzt, da mit einem komplizierten Bewegungsablauf die Bürstenkörper in drei Ebenen bewegt werden müssen, wobei erhebliche Massenträgheitskräfte zu überwinden sind. Die Grenze der Arbeitsgeschwindigkeit liegt bei etwa 300 Arbeitsgängen pro Minute und kann wegen der erforderlichen Wiederauffindgenauigkeit des Bohrloches nicht überschritten werden.

Bekan..t ist auch eine Maschine (US-PS 3 604 043), mit der aus thermoplastischem Kunststoff bestehende Borsten durch Schweißen mit einem aus dem gleichen thermoplastischem Kunststoff bestehenden Bürstenkörper verbunden werden.Die Maschine hat ein Borstenmagazin, in dem auf Länge geschnittene Borsten gestapelt sind. Durch in der Magazinwand befindliche Löcher werden Hülsen gesteckt, die an einem Halter sitzen und beim Einstecken in das Magazin mit Borsten gefüllt werden. Danach werden die freien Enden der Borsten mittels eines Heizelementes angeschmolzen. Der Bürstenkörper wird ebenfalls an den Befestigungsstellen der Borstenbündel mittels eines Heizelementes angeschmolzen und danach gleichzeitig mit mehreren Borstenbündeln verschweißt. Die Bürstenkörper von so hergestellten Bürsten können relativ dünnwandig und somit materialsparend ausgeführt wer-

Beschreibung

Die Erfindung betrifft ein Düngemittelkorn.

Als Düngemittel für Pflanzen wird heute in überwiegendem Maße Kunstdünger auf chemischer Basis verwendet, weil dieser dem Naturdünger, wie Stallmist, Kompost und dergleichen im Hinblick auf das erzielbare Wachstum der Pflanzen überlegen ist. Die Verwendung eines solchen Kunstdüngers zeigt jedoch erhebliche Nachteile.

Bei Verwendung von Kunstdünger ist eine optimale Dosierung weder bei den im Dünger enthaltenen Kern- noch Spurenstoffen möglich. Deshalb ist bei der Düngung eine Über- oder Unterdosierung die Regel.
Bei einer Unterdosierung wird das notwendige Pflanzenwachstum nicht erreicht, da sich insbesondere Kunstdünger aus dem Boden auswäscht, was zugleich zu einer Umweltbelastung führt. Eine Überdosierung bedeutet eine nicht erwünschte Kostensteigerung. Zugleich vergrößert sich der Auswascheffekt, und die Umwelt wird besonders stark belastet.

Es hat sich ferner gezeigt, daß bei Verwendung von Kunstdünger ein Gareschwund eintritt. Mit Gare wird der für den Pflanzenwuchs günstigste Zustand des Bodens bezeichnet. Dieser Gareschwund wirkt sich auf den Gehalt an Wasser, an Feinerde und an den notwendigen Bakterien aus. Insbesondere findet eine zunehmende Bodenverdichtung statt und nicht nur in der Oberfläche des Bodens sondern auch im Unterboden (Sohle). Die Bodenverdichtung bewirkt, daß der Gasaustausch zur Luft gehemmt wird, das heißt, die Adsorption der Gase der Luft im Boden wird mehr und mehr unterbunden. Damit werden der Boden und die Pflanze sehr stark abhängig von der Witterung, nämlich von Frost, Niederschlägen, Trockenheit und anderen Witterungseinflüssen. Außerdem erfolgt eine fortlaufende

Zunahme des Schädlings- und Krankheitsbefalles sowie eine Abnahme der Resistenz der Pflanzen, was über einen längeren Zeitraum einen Schwund der biologischen Qualitätszeichen der Pflanzen mit sich bringt. Eine Abhilfe ist in dieser Hinsicht nicht mit einem größeren Düngeraufwand zu erreichen, weil sich dieser Aufwand im Ertrag nicht niederschlägt.

Der Schwund der Fruchtbarkeit bewirkt einen Sortenabbau und führt damit zum Zwang eines häufigen Saatwechsels. Da die Pflanzen nicht mehr so widerstandsfähig sind, ist ein zunehmender Aufwand an Pflanzenschutzmitteln erforderlich, der wiederum zu einer zunehmenden Toxisierung des Bodens und der Pflanzen führt. Dies wirkt sich letzten Endes auf den Endverbraucher, das heißt auf Mensch und Tier nachteilig aus.

Aufgabe der vorliegenden Erfindung ist es, ein Düngemittelkorn anzugeben, das die Bodengare verbessert, ohne daß Dosierungsprobleme bei Verwendung des Düngemittels auftreten, das heißt, der Boden soll, wenn er verbraucht ist, wieder aufgebaut werden, und dieser Aufbau soll letztlich stabilisiert werden, und zwar sowohl in den oberen als auch in den unteren Bodenschichten.

Diese Aufgabe wird durch die Verwendung des Düngemittelkornes des Anspruches 1 gelöst.

Wird das erfindungsgemäße Düngemittelkorn in den Boden eingebracht, zerfällt es, und das Düngemittel zeigt die nachfolgend beschriebene Wirkung.

Das Urgesteinsmehl verhindert das Auswaschen der Nährstoffe aus dem Boden, und es reguliert gleichzeitig den Säurehaushalt des Bodens, insbesondere wird saurer Industrieregen neutralisiert. Hinzu kommt, daß das Urgesteinsmehl zusammen mit dem Fermentationshumus einer Verkrustung des Bodens entgegenden. Nachteilig jedoch ist, daß mit dem Verfahren nicht Bürsten beliebiger Form hergestellt werden können, also z.B. Rundkopfbürsten mit einem Borstenbesatz, der sich über 180° oder gar über 360° erstreckt.

Bei einer weiteren bekannten Maschine (US-PS 4 255 224) wird der Bürstenkörper mit dem an sich bekannten Bewegungsablauf, der von klassischen Bürstenherstellmaschinen bekannt ist, in jede beliebige Stellung gebracht. Die auf Länge geschnittenen Borsten werden mittels einer Hülse aus dem Borstenmagazin entnommen. Das freie Ende der Borsten wird mittels eines Heizelementes angeschmolzen, während gleichzeitig der Bürstenkörper mit einem anderen Heizelement an der vorgesehenen Befestigungsstelle des genannten Borstenbündels angeschmolzen wird. Nach dem Ausschwenken der Heizelemente aus dem Bereich zwischen Bürstenkörper und Borstenbündel wird das Borstenbündel an den Bürstenkörper herangeführt und mit diesem verschweißt. Hiermit können Bürsten beliebiger Form mit angeschweißten Borstenbündeln hergestellt werden. Der Nachteil solcher Maschinen liegt in der aufwendigen Konstruktion und der geringen Leistung. Die Arbeitsgeschwindigkeit nämlich ist dadurch begrenzt, daß für die Anschweißung jedes Borstenbündels eine Mindestzeit benötigt wird, die ein Vielfaches der Zeit beträgt, die für das Einstopfen eines Borstenbündels benötigt wird.

Bekannt ist auch ein Verfahren der eingangs genannten Art (DE-OS 28 49 510), bei dem Borstenbündel entweder aus einem Magazin aus zugeschnittenen Borsten entnommen wird oder Bürstenbündel von einem Strang abgetrennt und über kurze Führungskanäle an einen Bürstenkörper herangeführt werden. Hier müssen die Borstenbündel so umfaßt bleiben, daß sich die einzelnen Borsten nicht voneinander lösen können. Damit lassen sich Bürsten herstellen, bei denen die Borsten in verschiedene Richtungen weisen, wobei alle Borstenbündel gleichzeitig angeschweißt werden können, so daß eine große Fertigungskapazität erzielt wird. Allerdings ist es mit diesem Verfahren nicht möglich, Borstenbündel in jeder beliebigen Richtung am Bürstenkörper zu befestigen, da wegen der Notwendigkeit, die Bündel zusammenhalten zu müssen, die Führungskanäle nur kurz ausgebildet werden können und deshalb nur kleine Richtungsänderungen möglich sind.

Schließlich ist auch ein Verfahren bekannt (DE-OS 29 22 877), bei dem Borstenbündel durch eine Formwand hindurchgesteckt werden, so daß ihre Verbindungsenden in einen Formhohlraum ragen. Danach wird der Formhohlraum zur Bildung eines Bürstenkörpers mit thermoplastischem Kunststoff ausgespritzt, wobei die in den Formhohlraum ragenden Borstenbündelenden mit Kunststoff umspritzt werden.

Der Erfindung liegt die Aufgabe zugrunde, ein Verfahren vorzuschlagen, mit dem es möglich ist, Bürsten jeder beliebigen Form herzustellen, so z.B. auch Bürsten, die rundum mit Borsten besetzt sind. Durch die Erfindung sollen auch Maschinen geschaffen werden, mit denen das Verfahren ausgeführt werden kann.

Diese Aufgabe wird nach der Erfindung dadurch gelöst, daß zuerst Borstenbündel hergestellt werden, deren einzelne Borsten miteinander verbunden sind und daß die Borstenbündel erst danach zum Bürstenkörper transportiert und an diesem befestigt werden.

Durch die Verbindung der Borsten untereinander ist jedes Borstenbündel eine zusammenhängende Einheit, die durch beliebig lange Rohrleitungen geführt werden kann, ohne daß die Gefahr besteht, daß sich das Borstenbündel auflöst. Es besteht damit eine große Freiheit in der Verlegung der Rohrleitungen, so daß die Borstenbündel in beliebigen Richtungen an den Bürstenkörper herangeführt werden können. Dadurch ist es möglich, Bürsten beliebiger Form herzustellen, z.B. auch Bürsten, die rundum mit Borsten besetzt sind.

Es ist vorteilhaft (Anspruch 2), die Borsten an beiden Enden des Borstenbündels miteinander zu verbinden, weil dadurch die Handhabung, z.B. Magazinierung, der Borstenbündel, erleichtert wird.

Die Borstenbündel können auf verschiedene Art und Weise mit dem Bürstenkörper verbunden werden. Wenn die Borsten aus thermoplastischem Kunststoff bestehen, können sie durch Verschweißen zu einem Borstenbündel verbunden werden (Anspruch 3). Die Borsten können auch gemäß Anspruch 4 zusätzlich an ihren Verbindungsenden mit Kunststoff umspritzt werden. Mit diesem Verfahren können Borsten mit einem Bürstenkörper verbunden werden, mit dem sie selber nicht verschweißbar sind, wenn der Kunststoff, mit dem die Borstenbündel umspritzt wurden, seinerseits mit dem Bürstenkörper verschweißbar ist.

Der Transport der Borstenbündel in den Rohrleitungen kann auf verschiedene Art und Weise bewirkt werden. Besonders einfach ist die Förderung mittels Druckluft (Anspruch 5). In diesem Fall werden die Borstenbündel ähnlich wie die Behälter in einer Rohrpostanlage befördert. Mit diesem Verfahren können auch weite Wege zurückgelegt werden und der Bauaufwand der nötigen Maschine ist gering. Die Borstenbündel können jedoch auch mechanisch durch die Führungskanäle geschoben werden (Anspruch 6).

Man kann, wie an sich bekannt, Bürstenkörper aus thermoplastischem Kunststoff verwenden und die Ansatzstellen für die Borstenbündel plastifizieren, bevor die ebenfalls plastifizierten Borstenbündel an den Bürstenkörper angedrückt werden (Anspruch 7). Eine besonders gute Verbindungsstelle erhält man, wenn die Borstenbündel beim Anbringen aufgestaucht werden, wobei sich die Verbindungsenden in einem plastischen Zustand befinden (Anspruch 8). Der plastische Zustand kann sowohl vom Verschweißen der Borstenbündel untereinander herrühren als auch dadurch erzeugt werden, daß fertige Borstenbündel vor dem Ansetzen an ihren Verbindungsenden erhitzt werden. Die Aufstauchkraft kann dynamisch erzeugt werden durch rasches Heranbewegen der Borstenbündel an den Bürstenkörper (Anspruch 9). Man kann die zum Aufstauchen nötige Kraft jedoch auch durch mechanisches Andrücken erzeugen (Anspruch 10).

Bei einem anderen Verfahren, das im Anspruch 11 angegeben ist, werden die Borstenbündel mit ihren Verbindungsenden in einen Formhohlraum geführt und der Bürstenkörper wird im Formhohlraum hergestellt. Hierbei kann, wie an sich bekannt, thermoplastischer Kunststoff in den Formhohlraum eingespritzt werden (Anspruch 12). Man kann jedoch in dem Formhohlraum auch Kunststoff zur Ausschäumung bringen (Anspruch 13). Damit wird ebenfalls ein massiver Bürstenkörper gebildet, der jedoch aus porösem Material besteht und deshalb ein geringes Gewicht hat. Solche Bürstenkörper eignen sich insbesondere für große Bürsten, wie z.B. Besen. Schließlich kann in den Formhohlraum auch Gießharz eingebracht werden, das durch chemische Reaktion aushärtet (Anspruch 14). Im Formhohlraum kann auch ein hohler Bürstenkörper geformt werden (Anspruch 15). Hierzu bieten sich an das Blasformverfahren (Anspruch 16) und das Tiefziehen (Anspruch 17). Schließlich kann hierfür auch das sogenannte Rotationsverfahren angewendet werden, bei dem aktiviertes Harz mit allen Stellen der Form dadurch in Berührung gebracht wird, daß die Form entsprechend bewegt wird, wobei das aktivierte Kunstharz aushärtet. Bei allen diesen Methoden werden die Verbindungsenden der Borstenbündel im Bürstenkörper verankert.

Der Formhohlraum kann gemäß Anspruch 18 dadurch abgedichtet werden, daß die Verbindungsenden der Borstenbündel gegen die Mündungen der Löcher gedrückt werden, durch die die Borstenbündel in den Formhohlraum hineinragen. Zuvor können die Bostenbündel dabei axial fixiert werden (Anspruch 19).

Eine Verbindung zwischen Borstenbündel und Bürstenkörper
kann gemäß Anspruch 20 dadurch erfolgen, daß die Verbindungsenden der Borstenbündel in Löcher eines vorgefertigten Bürstenkörpers eingeführt und danach ein Formschluß
gegen Herausziehen geschaffen wird. Der Formschluß kann
gemäß Anspruch 21 durch Verengung der Eintrittsmündungen
der Löcher erfolgen. Hierbei kann zur Plastifizierung des
Bürstenkörpermaterials Ultraschall oder Reibung angewendet werden. Man kann auch (Anspruch 22) die Borstenbündel
in unterschnittene Löcher einführen und zur Herstellung
eines Formschlusses die Verbindungsenden nach dem Einstecken verdicken.

Bei dem im Anspruch 22A angegebenen Verfahren wird ausgegangen von einem Verfahren, wie es in der DE-OS 28 49 510
beschrieben ist. Durch die Verschweißung der Borsten eines Borstenbündels wird ein guter Halt der Borstenbündel
im Bürstenkörper erzielt, da durch die Verdickung am Borstenbündel auch ein Formschluß am Bürstenkörper entsteht.

In den Ansprüchen 23 bis 55  sind Maschinen zur Herstellung nach dem genannten Verfahren angegeben. Die Ansprüche
23 bis 29 beschreiben eine Maschine, mit der vorgefertigte Bürstenkörper mit Borstenbündeln bestückt werden. Die
Ansprüche 30 bis 38 betreffen Maschinen, in denen Bürstenkörper hergestellt werden, wobei mit der Herstellung der
Bürstenkörper die Verankerung der Borstenbündel im Bürstenkörper erfolgt. Damit also ist das Verfahren nach den Ansprüchen 11 bis 19 ausführbar.

Die Ansprüche 39 bis 43 betreffen Einrichtungen, mit denen
Borstenbündel in der Maschine auf die verschiedenen Rohrleitungen verteilt werden. Die Ansprüche 44 bis 47 betreffen Einrichtungen zum Transport der Borstenbündel innerhalb der Rohrleitungen, während sich die Ansprüche 49 bis 55 auf Vorrichtungen zur Herstellung von Borstenbündeln beziehen.

In den stark schematisierten Zeichnungen sind Ausführungsbeispiele der Erfindung dargestellt. Es zeigen:

Fig. 1 eine Bürstenherstellmaschine, mit der Borstenbündel auf vorgefertigte Bürstenkörper aufgebracht werden,

Fig. 2 eine der Fig. 1 entsprechende Bürstenherstellmaschine für die Herstellung einer Bürste, die über einen großen Umfangswinkel mit Borsten besetzt ist,

Fig. 3 eine Ansicht einer in der Maschine nach Fig.2 hergestellten Bürste,

Fig. 4 eine weitere Maschine zum Herstellen von Bürsten, die einen Drehtisch aufweist und in der die Borstenbündel nach dem Verbringen in einen Borstenbündelhalter plastifiziert werden,

Fig. 5 eine Detaildarstellung einer Rohrleitung für die Führung von Borstenbündeln samt mechanischem Schieber,

Fig. 6 einen Längsschnitt durch eine längenverschiebbare Düse für die Aufnahme von Borstenbündeln,

Fig. 7 einen konkaven Borstenbündelhalter, der von seiner Innenseite her mit Borstenbündeln besteckbar ist,

Fig. 8 den Borstenbündelhalter nach Fig. 7 in einer anderen Arbeitsphase,

Fig.9 einen vertikalen Schnitt durch einen Verteilerblock nach Linie IX-IX in Fig. 10,

Fig.10 eine teilweise geschnittene Ansicht des Verteilerblockes nach Fig. 9 samt dem Verteilerblock zugeordnetem Magazin,

Fig.11 eine als Spritzgußwerkzeug ausgebildete Bürstenherstellmaschine, mit der der Bürstenkörper aus thermoplastischem Werkstoff geformt wird und dabei die Borstenbündel an ihren Verbindungsenden formschlüssig umhüllt,

Fig.12 eine Draufsicht auf einen Borstenbündelverteiler entsprechend dem Pfeil XII in Fig.11,

Fig.13 eine Ansicht eines Borstenbündels mit verschweißtem Verbindungsende,

Fig. 14 einen Teilschnitt durch ein Spritzgußwerkzeug bei einer Arbeitsphase unmittelbar nach dem Einführen der Borstenbündel,

Fig. 15 einen Schnitt durch das Werkzeug nach Fig.14 bei einer anderen Arbeitsphase, in der die Borstenbündel festgeklemmt sind und ihre Verbindungsenden angestaucht werden,

Fig.16 einen vergrößerten Ausschnitt aus Fig. 11 im Bereich des strichpunktierten Rahmens XVI in Fig. 11, bei einer anderen Arbeitsphase, in der die Form bereits geöffnet ist,

Fig.17 einen Schnitt durch ein Spritzgußwerkzeug, bei dem die Bürstenkörper ebenfalls aus thermoplastischem Kunststoff geformt werden und zu dem die Borstenbündel mittels biegsamer mechanischer Schieber zugeführt werden und die Borstenbündel in einem Gurt gehalten sind,

Fig. 18    eine teilweise geschnittene Seitenansicht einer Bürstenherstellmaschine,in der Bürstenkörper aus aufgeschäumtem Kunststoff geformt werden und dabei die Borstenbündel formschlüssig umhüllen,

Fig.19    einen Schnitt durch das Werkzeug nach Fig.18 bei einer von Fig. 18 verschiedenen Arbeitsphase,

Fig.20    eine Endansicht auf das Verbindungsende eines Borstenbündels,

Fig. 21    bis 24  verschiedene Arbeitsphasen bei einem Verfahren, bei dem Borstenbündel in hinterschnittene Löcher des Bürstenkörpers eingesetzt und innerhalb der hinterschnittenen Löcher aufgeweitet werden,

Fig.25    bis 27  verschiedene Arbeitsphasen bei einem Verfahren, bei dem Borstenbündel in Löcher des Bürstenkörpers eingesetzt und die Eintrittsmündungen der Löcher danach verengt werden, um einen formschlüssigen Halt der Borstenbündel zu erreichen,

Fig.28    einen Teilschnitt durch ein Borstenbündelmagazin mit zugeschnittenen Borsten und eine Entnahmerichtung für Borsten aus dem Magazin,

Fig. 29    eine Vorrichtung zum Verbinden der Borsten
           eines Borstenbündels und eine Transportvorrichtung für fertige Borstenbündel,

Fig. 30    eine Draufsicht auf die Vorrichtung nach Fig.
           29 in Richtung des Pfeiles XXX in Fig.29,wobei jedoch Teile weggelassen sind,

Fig. 31    eine Darstellung entsprechend Fig. 29, wobei
           jedoch die Borsten an beiden Enden des Borstenbündels miteinander verbunden werden,

Fig. 32    eine Draufsicht auf die Vorrichtung  nach

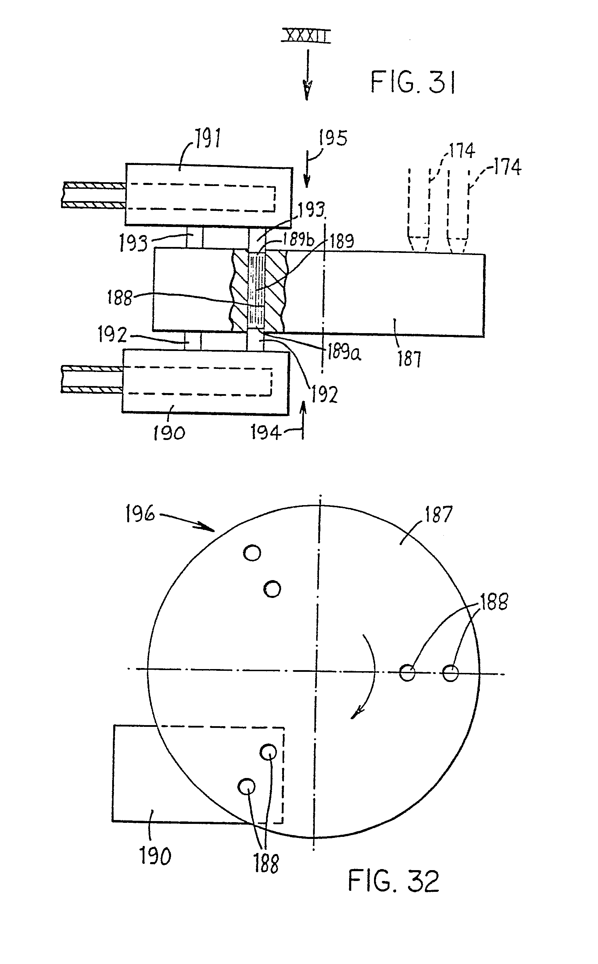

           Fig. 31 entsprechend dem Pfeil XXXII in Fig.
           31,

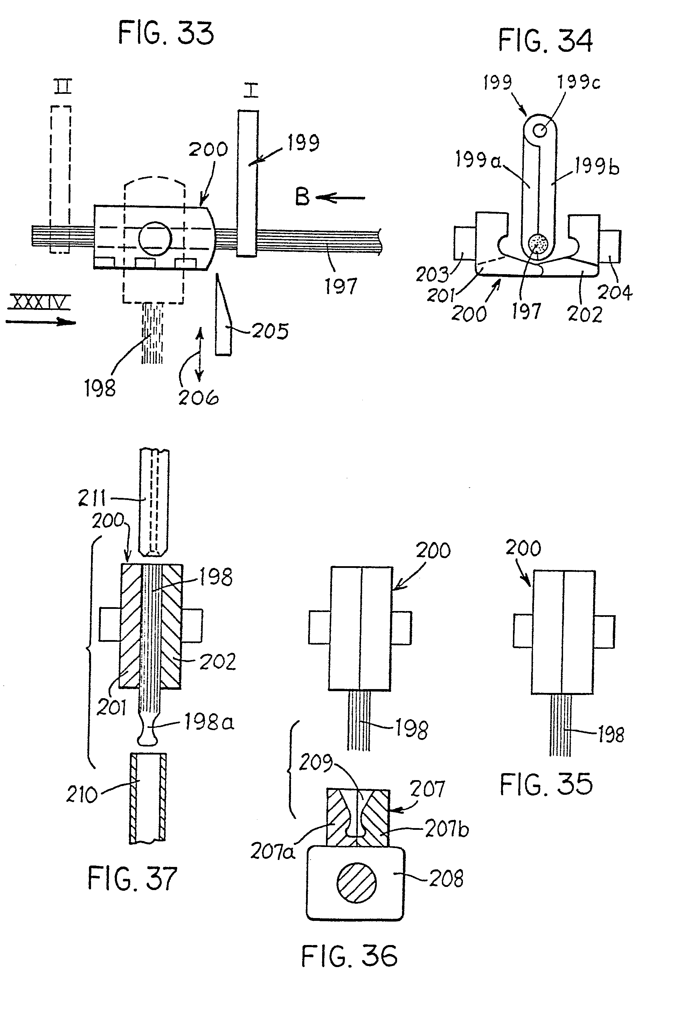

Fig. 33    eine Vorrichtung zur Herstellung von Borstenbündeln, mit der Borstenbündel von einem Strang
           aus vielen Borsten abgetrennt werden,

Fig. 34    eine Ansicht der Vorrichtung nach Fig. 33 in
           Richtung des Pfeiles XXXIV in Fig. 33,

Fig. 35    eine Ansicht einer Klemmvorrichtung für ein
           abgetrenntes Borstenbündel samt eingeklemmtem
           Borstenbündel, wie sie in der Trennvorrichtung nach den Fig. 33 und 34 verwendet wird,

Fig. 36    die Haltevorrichtung nach Fig. 35 samt Einrichtungen zum Verbinden der Borsten des Borstenbün-
           dels,

Fig. 37    einen Querschnitt durch die  Haltevorrichtung nach Fig. 35 und 36 samt einer angrenzenden Transportvorrichtung für Borstenbündel,

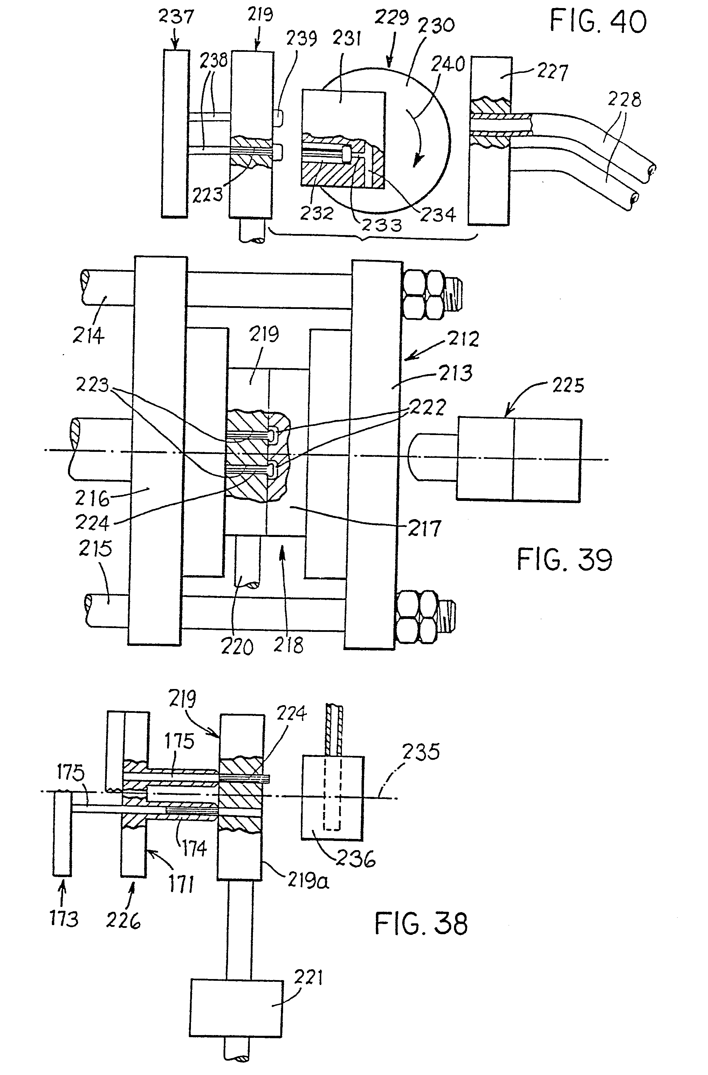

Fig. 38    eine Vorrichtung zum Erwärmen der Enden von Borstenbündeln,

Fig. 39    ein Spritzgußwerkzeug, in dem Borstenbündel an ihren Enden mit thermoplastischem Kunststoff umspritzt werden und

Fig. 40    eine Ausstoßvorrichtung für fertige Borstenbündel und eine Vorrichtung zu deren Abtransport.

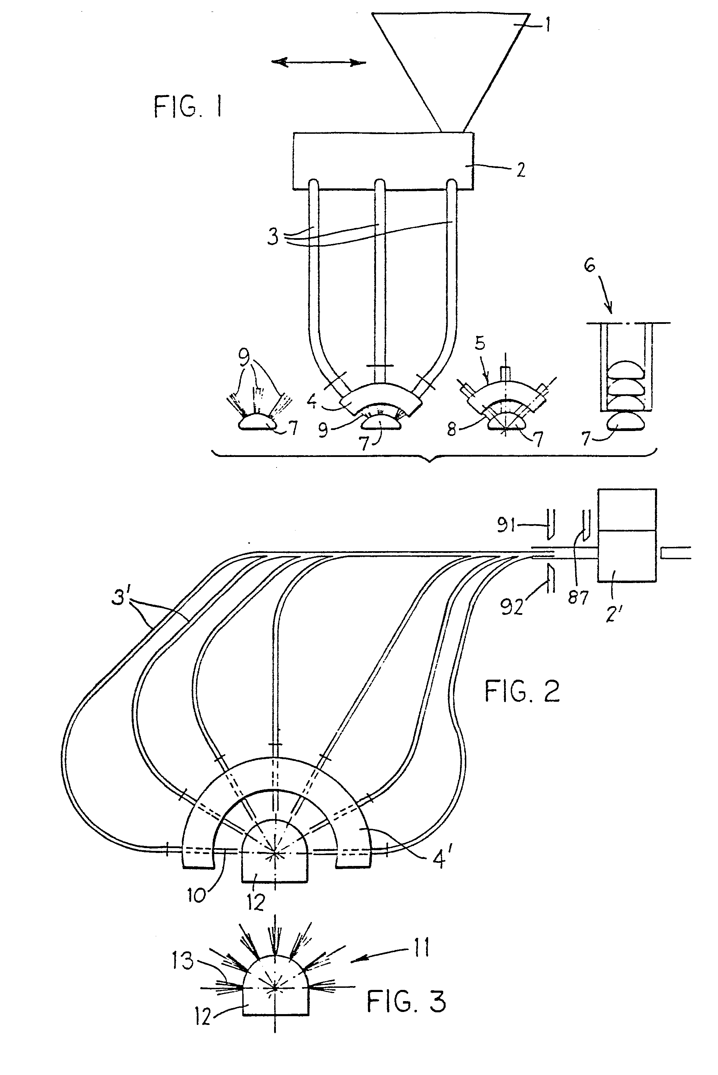

Die Bürstenherstellmaschine nach Fig. 1 hat ein Magazin 1 für Borstenbündel, einen Verteilerblock 2, vom Verteilerblock 2 ausgehende Rohrleitungen 3, einen Borstenbündelhalter 4, eine Heizeinrichtung 5 für die stellenweise Plastifizierung von Bürstenkörpern und ein Magazin 6 für Bürstenkörper.

Mit dieser Maschine werden Bürsten wie folgt hergestellt. Aus dem Magazin 6 für Bürstenkörper werden Bürstenkörper 7 entnommen und zu der Heizeinrichtung 5 geführt. Die Heizeinrichtung 5 hat mehrere Heizelemente 8, die entsprechend den vorgesehenen Befestigungsstellen für Borstenbündel angeordnet sind. Mit den Heizelementen 8 wird der aus thermoplastischem Kunststoff bestehende Bürstenkörper 7 stellenweise erweicht. Danach wird der Bürstenkörper zu dem Borstenbündelhalter 4 transportiert. Über die Rohrleitungen 3 werden alle Borstenbündel gleichzeitig zu dem Borstenbündelhalter transportiert und mit ihren Verbindungsenden gegen den Bürstenkörper 7 bewegt. Hierbei sind die Verbindungsenden der Borstenbündel vorzugsweise plastifiziert, so daß eine gute Verschweißung der Borstenbündel 9 mit den vorher erwärmten Stellen des Bürstenkörpers 7 entsteht. Nachdem sich die Verschweißungsstellen zwischen Bürstenkörper 7 und Borstenbündeln 9 genügend verfestigt haben, wird der Borstenbündelhalter zurückgefahren, wonach die Bürste entnommen werden kann.

Die Bürstenherstellmaschine nach Fig. 2 arbeitet gleich wie die Maschine nach Fig. 1. Die hier mit 3' bezeichneten Rohrleitungen gehen ebenfalls von einem Verteilerblock 2' aus und führen zu einem Borstenbündelhalter 4'. Der Borstenbündelhalter 4' unterscheidet sich von dem Borstenbündelhalter 4 nach Fig. 1 dadurch, daß er sich über einen Winkel von 180° erstreckt, während der Borstenbündelhalter 4 nach Fig.1 sich über einen Winkel von nur 90° erstreckt. Die Rohrleitungen 3' müssen deshalb wesentlich größere Richtungsänderungen für Borstenbündel bewirken, was jedoch ohne weiteres möglich ist, da sich die Borstenbündel infolge der Verbindung der einzelnen Borsten untereinander auch auf langen Transportwegen nicht auflösen können.

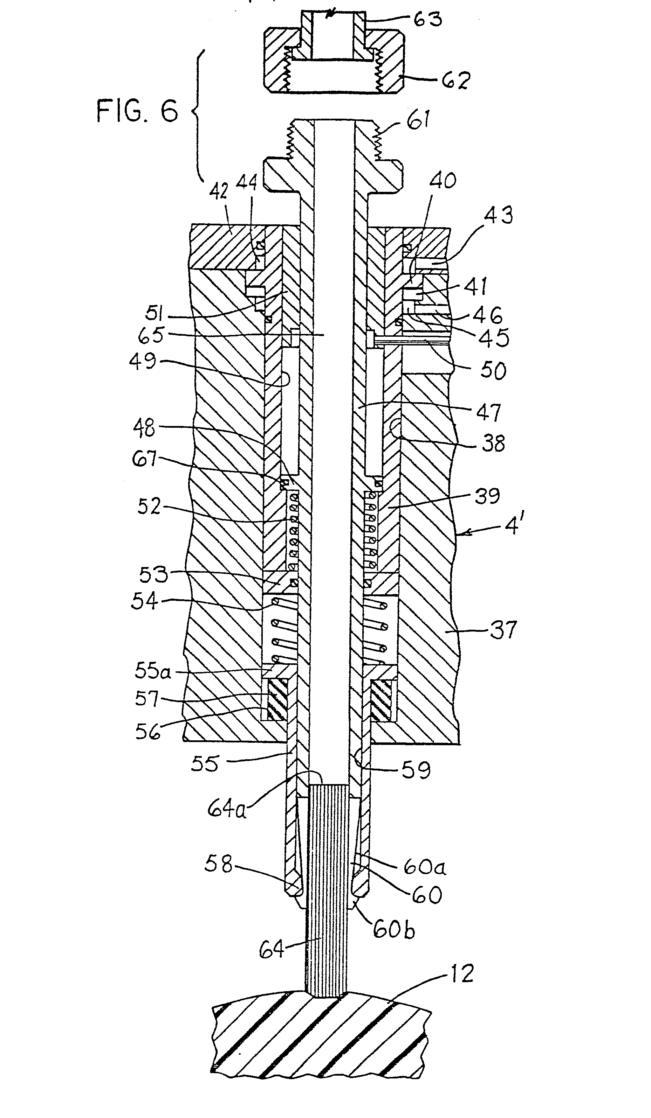

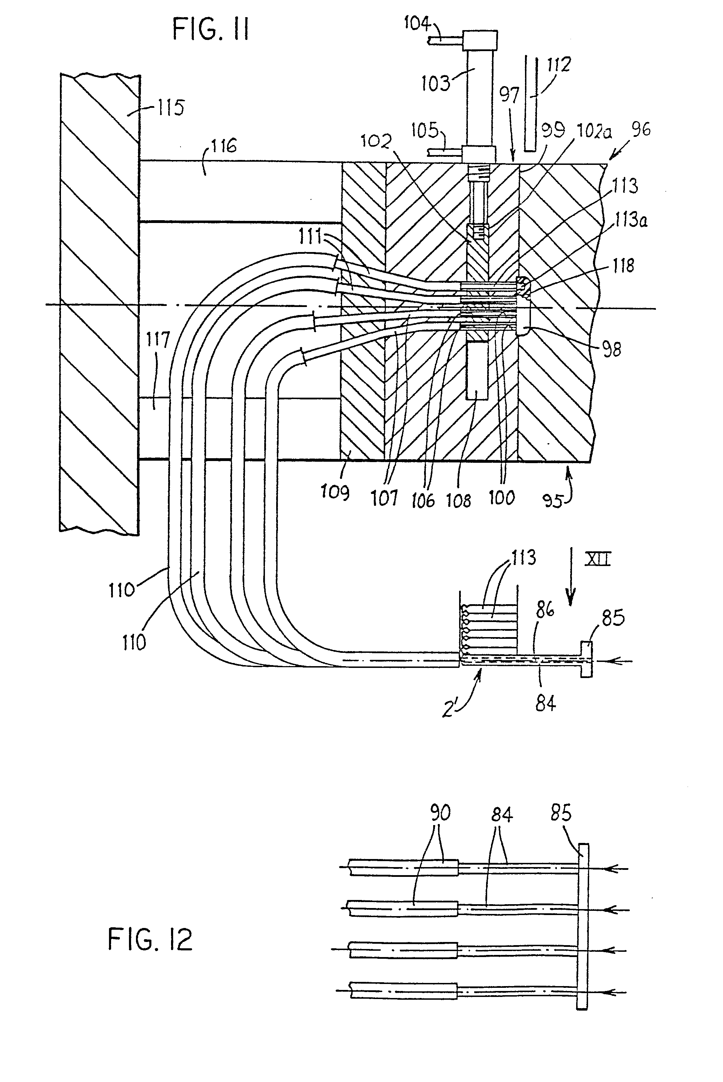

Während es bei der Herstellung von Bürsten nach Fig. 1 noch möglich ist, die Borstenbündel durch bloßes Wegbewegen des Bürstenkörpers 7 aus dem Borstenbündelhalter herauszuziehen, ist dies nicht mehr ohne weiteres bei der Herstellung einer Bürste nach Fig.3 möglich. Der Borstenbündelhalter 4 enthält deshalb axial bewegbare Düsen 10, die individuell zurückgezogen werden können, wodurch die Borstenbündel freigegeben werden.Eine solche Düse 10 ist in Fig. 6 im Detail dargestellt und wird noch besprochen werden. Besprochen werden wird auch noch anhand der Fig. 9 und 10 die Ausbildung eines Verteilerblockes 2 mit zugeordneten Elementen, die auch in Fig. 2 dargestellt sind.

Eine Bürstenherstellmaschine nach Fig. 2 kann wegen der großen Freiheit für die Verlegung der Rohrleitungen auch für die Herstellung von Rundbürsten, die über einen Winkel von 360° mit Borsten besetzt sind, abgewandelt werden.

Die Rohrleitungen 3, 3' können sowohl starre Rohre als auch biegsame Schläuche sein. Auch können biegsame Schläuche und starre Rohre innerhalb einer Rohrleitung miteinander kombiniert werden.

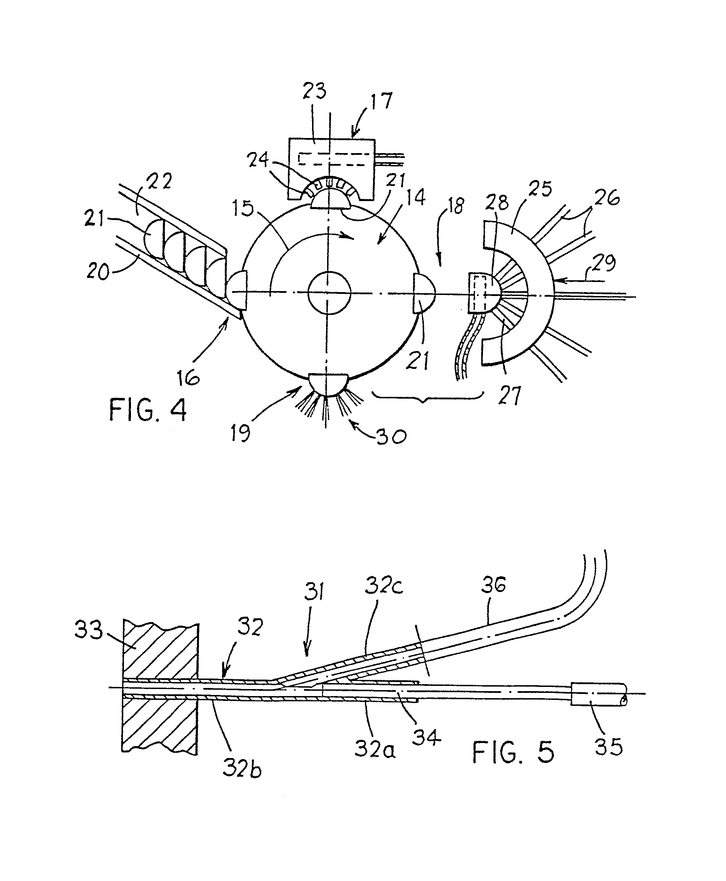

Die Bürstenherstellmaschine nach Fig. 4 hat eine Trommel 14, die mit Drehschritten von 90° in Richtung des Pfeiles 15 drehbar ist. Am Umfang der Trommel 14 sind vier Stationen angeordnet, nämlich eine Zuführstation 16 für Bürstenkörper, eine Erwärmungsstation 17 für die stellenweise Plastifizierung von Bürstenkörpern, eine Befestigungsstation 18, in der plastifizierte Borstenbündel am erwärmten Bürstenkörper befestigt werden und eine Auswerfstation 19, in der fertige Bürsten ausgeworfen werden.

In der Zuführstation befindet sich ein Magazin 20 für Bürstenkörper 21, die durch Schwerkraftwirkung in dem schrägen Magazinschacht 22 zur Trommel 24 hin gleiten. Dort wird jeweils ein Bürstenkörper festgeklemmt. Nach Drehung der Trommel um 90° gelangt der Bürstenkörper 21 in die Erwärmungsstation, in der sich eine Heizeinrichtung 23 befindet, die wiederum mit einzelnen Heizelementen 24 zur stellenweisen Erwärmung des Bürstenkörpers ausgerüstet ist, wie dies schon anhand der Fig. 1 (Heizeinrichtung 5 mit Heizelementen 8) beschrieben wurde.

Der erwärmte Bürstenkörper 21 wird durch einen weiteren Drehschritt der Trommel um 90° in die Befestigungsstation gebracht. In der Befestigungsstation befindet sich ein Borstenbündelhalter 25, an den Rohrleitungen 26 herangeführt sind, die mit Düsen 27 kommunizieren. Die in den Düsen 27 gehaltenen Borstenbündel werden mittels einer Heizeinrichtung 28 an ihren Verbindungsenden plastifiziert. Nach der Plastifizierung wird das Heizelement 28 entfernt und der Borstenbündelhalter 25 wird in Richtung des Pfeiles 29 mittels einer nicht dargestellten Bewegungsvorrichtung in Richtung des Bürstenkörpers 21 bewegt. Die Vorgänge sind zeitlich so aufeinander abgestimmt, daß die erwärmten Stellen des Bürstenkörpers noch plastisch sind wenn die ebenfalls plastifizierten Enden der Borstenbündel mit dem Bürstenkörper 21 in Berührung kommen.

Nachdem die Borstenbündel am Bürstenkörper 21 einen genügend festen Halt gewonnen haben, wird der Borstenbündelhalter 25 zurückgezogen bzw. axial bewegliche Düsen 27 werden relativ zum Borstenbündelhalter 25 bewegt, wodurch die Borsten freigegeben werden. Bei einem weiteren Drehschritt um 90° gelangt die fertige Bürste 30 in die Auswerfstation und wird dort ausgeworfen.

Zur Klarstellung sei bemerkt, daß stets alle vier Stationen gleichzeitig in Tätigkeit sind, daß also nicht der beschriebene Zyklus vollständig abläuft bevor ein neuer Bürstenkörper aus dem Magazin 20 von der Trommel aufgenommen wird, sondern daß gleichzeitig ein Bürstenkörper aufgenommen, ein Bürstenkörper erwärmt, ein Bürstenkörper mit Borstenbündeln besetzt und eine fertige Bürste ausgeworfen wird.

Fig. 5 zeigt einen Endbereich einer Rohrleitung 31 für die Förderung von Borstenbündeln. Ein Endstück 32 der Rohrleitung ist starr ausgebildet und an einem Borstenbündelhalter 33 befestigt. Das Endstück 32 hat einen Stutzen 32a, der mit einem vorderen Teil des Endstückes 32 fluchtet. Der vordere Teil 32b geht nach hinten hin in einen Leitungsteil 32c über, der schräg zum vorderen Abschnitt 32b verläuft. In den Stutzen 32a greift eine Stange 34 ein, die von einem Druckmittelzylinder 35 ausgeht, mit dem die Stange 34 hin- und her geschoben werden kann. An den Leitungsteil 32c kann ein Schlauch 36 oder auch ein starrer Leitungsteil angeschlossen werden.

Mit Rohrleitungen 31 wird wie folgt gearbeitet. Borstenbündel werden über den Schlauch 36 und den Leitungsteil 32c durch Druckluft in den Leitungsteil 32b gefördert. Wenn ein Borstenbündel im Leitungsteil 32b angelangt ist, kann es durch Vorschieben der Stange 34 mechanisch nach vorne gedrückt werden, um das Borstenbündel mit einer genau definierten Kraft an ein Heizelement und danach an einen Bürstenkörper anzudrücken. Die Vorrichtung nach Fig. 5 hat den Vorteil, daß Borstenbündel mittels Druckluft über einen beliebig weiten Weg gefördert werden können und dennoch ein definierter Andruck an einen Bürstenkörper möglich ist.

Bei der Besprechung der Fig. 1 wurden axial bewegliche Düsen für Borstenbündel erwähnt. Eine solche Düse wird nachfolgend anhand der Fig. 6 beschrieben. In einem Grundkörper 37 des Borstenbündelhalters 4' (siehe Fig. 2) befindet sich eine Bohrung 38, in der eine Hülse 39 gleitbar ist. Die Hülse 39 hat in ihrem oberen Bereich einen Bund 40, der als Kolben wirkt und in einem kurzen Zylinder 41 beweglich ist, der in den Grundkörper 37 eingearbeitet ist. Auf der Oberseite des Grundkörpers 37 befindet sich ein Deckel 42. Innerhalb des Deckels 42 ist eine Lufteinlaßbohrung 43 vorgesehen, die in einen mit dem Zylinder 41 kommunizierenden Raum 44 mündet. Unterhalb des Zylinders 41 befindet sich ein mit diesem kummunizierender Raum 45, in den ein Luftkanal 46 einmündet.

In der Hülse 39 ist eine weitere Hülse 47 axial beweglich. An die Hülse 47 ist ein Kolben 48 angearbeitet, der in einem Zylinder 49 gleitbar ist. In den Zylinder 49 mündet ein Luftkanal 50. Der Zylinder 49 ist nach oben hin durch eine Führungsbüchse 51 abgeschlossen, in der die Hülse 47 geführt ist.

Unterhalb des Kolbens 48 ist die Hülse 39 von einer Schraubendruckfeder 52 umgeben, die sich mit ihrem oberen Ende am Kolben 48 und mit ihrem unteren Ende an einem Deckel 53 abstützt, der auf das untere Ende der Hülse 39 aufgeschraubt ist. Auf den Deckel 53 wirkt eine Schraubendruckfeder 54 ein, die sich mit ihrem unteren Ende auf einem Flansch 55a einer Hülse 55 abstützt. Die Feder 54 versucht also die Hülse 39 so weit nach oben zu drücken, bis der Kolben 40 an dem Deckel 42 anliegt.

Zwischen dem Flansch 55a und einer Schulter 56 in der Bohrung 38 ist ein Pufferkörper 57 aus elastomerem Material eingefügt. Die Hülse 55 ragt aus dem Grundkörper 37 des Borstenbündelhalters 4' heraus und hat an ihrem unteren Ende eine wulstartige Verdickung 58, die die Hülsenbohrung 59 an ihrem unteren Ende verengt. Die Verdickung 58 ist zum Zusammenwirken mit Schrägflächen 60a bestimmt, die sich an elastisch nachgiebigen Zungen 60 befinden. Über den Umfang der Hülse sind mehrere Zungen 60 vorgesehen. Die Zungen haben an ihrem unteren Ende eine nach außen ragende Verdickung 60b, die mit den Verdickungen 58 der Hülse 55 zusammenwirkende Anschläge bilden.

Am oberen Ende der Hülse 47 befindet sich ein Schraubstutzen 61, auf den eine Überwurfmutter 62 aufschraubbar ist, die sich am vorderen Ende einer Rohrleitung 63 befindet.

Die Düse arbeitet wie folgt. Die Borstenbündel 64 werden mittels Druckluft durch den in der Hülse 47 befindlichen Kanal 65 gefördert, bis sie am Bürstenkörper 12 zur Anlage kommen. Während dieses Vorganges ist der Zylinderraum 66 mit Druckluft beaufschlagt, wodurch die Feder 52 zusammengedrückt gehalten wird und der Kolben 48 auf einer Schulter 67 am unteren Ende des Zylinderraumes 66 festgehalten wird. Der Kolben 40 und damit die Hülse 39 befinden sich in ihrer obersten Stellung.

Zum Festklemmen des Borstenbündels 64 wird über den Kanal 43 Druckluft zugeführt, die die Hülse 39 nach unten zu drücken versucht. Hierbei wird die Hülse 47 mitgenommen, so daß sie eine Bewegung relativ zu der Hülse 55 ausführt. Dadurch bewegen sich die Schrägflächen 60a der Zungen relativ zu den Verdickungen 58, so daß die Zungen, die insgesamt eine Spannzange bilden, gegen den Umfang des Borstenbündels 64 gedrückt werden. Das Borstenbündel 64 ist danach durch Klemmung mit der Hülse 47 verbunden. Diese Klemmung ist schon nach einem kurzen Bewegungsweg hergestellt. Eine weitere Abwärtsbewegung der Hülse 39 bewirkt nun ein mechanisches Andrücken des Borstenbündels 64 an den Bürstenkörper 12, wodurch eine gute Verschweißung erreicht wird.

Zum Freigeben des angeschweißten Borstenbündels 64 wird der Zylinderraum 66 von Druckluft entlastet, die über den Kanal 50 abströmt. Die Feder 52 drückt nun die Hülse 47 innerhalb der Hülse 39 nach oben, wobei die Hülse 55 unter Kompression der Feder 54 mitgenommen wird, nachdem die Verdickungen 60b der Zungen 60 an der Verdickung 58 der Hülse 55 zur Anlage gekommen ist. Dabei wurde auch die Festklemmung des Borstenbündels aufgehoben. Die Hülse 55 wird so weit in den Grundkörper 37 eingezogen, daß die unteren Enden 60b der Zungen 60 noch etwas oberhalb des oberen Endes 64a des Borstenbündels 64 liegen. Die Aufwärtsbewegung kann noch ein wenig vergrößert werden durch Druckbeaufschlagung des Zylinderraumes 41 über den Luftkanal 46.

Durch die Zurückziehbarkeit der Düse 10 werden also die Borstenbündel vollständig freigegeben, so daß das Entfernen der Bürste 12 aus dem Borstenbündelhalter (siehe Fig. 2) unproblematisch ist. Das Herausziehen der Bürste wird insbesondere auch nicht durch die horizontalen Düsen 10 behindert.

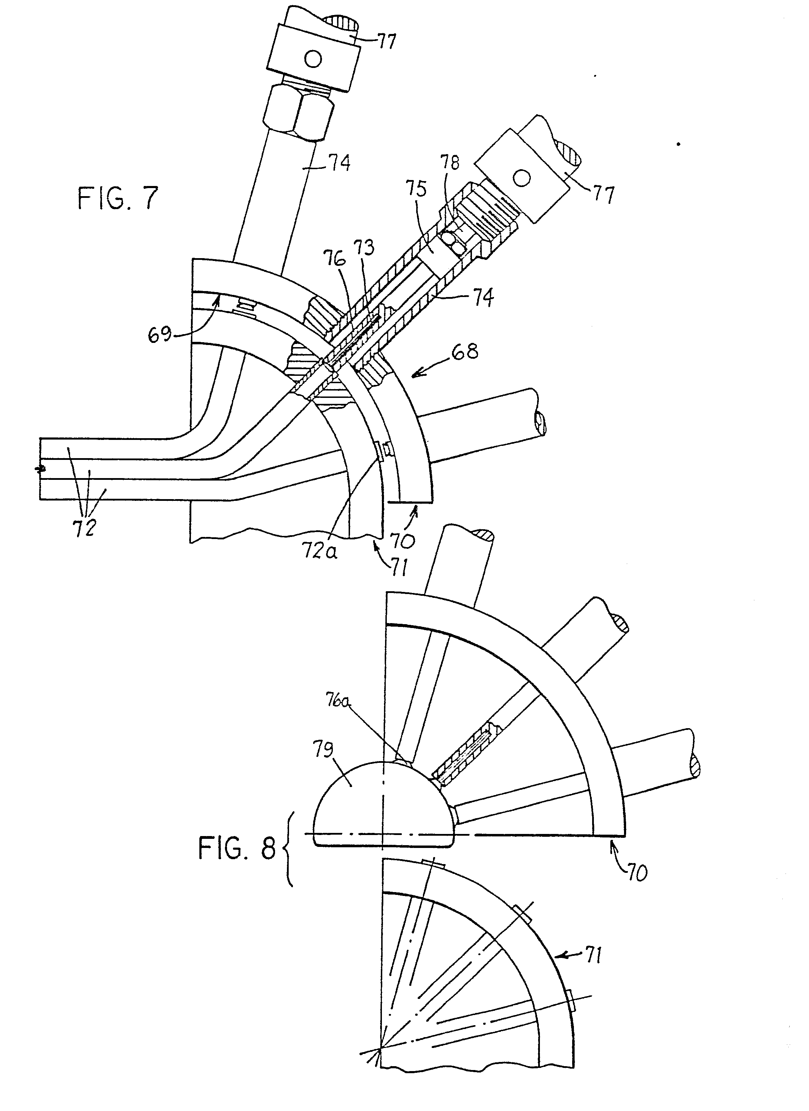

Der in den Fig. 7 und 8 dargestellte und insgesamt mit 68 bezeichnete Borstenbündelhalter wird nicht, wie die bereits beschriebenen Borstenbündelhalter 4 und 4' von außen her mit Borstenbündeln beschickt, sondern von innen, also mit Richtung auf eine konkave Fläche 69 des Borstenbündelhalters. Der Borstenbündelhalter 68 hat einen Halteteil 70 und einen Beschickungsteil 71. An den Beschickungsteil 71 sind Rohrleitungen 72 für die Zuführung von Borstenbündeln 73 angeschlossen. Am Halteteil 70 befinden sich viele Haltekörper 74, die Führungszylinder für einen Führungskörper 75 bilden. Der Führungskörper 75 ist mit einer Hülse 76 verbunden, in dem ein Borstenbündel 73 aufgenommen werden kann.

An das hintere Ende des Haltekörpers 74 ist ein doppeltwirkender Druckmittelzylinder, vorzugsweise Pneumatikzylinder, angesetzt, aus dem eine Kolbenstange 78 herausragt, die mit dem Führungskörper 75 verbunden ist. Mit dem doppeltwirkenden Druckmittelzylinder 77 kann die Hülse 76 hin- und herbewegt werden.

Bei der Zuführung von Bürstenbündeln über die Leitungen 72 ist der Beschickungsteil 71 so auf den Halteteil 70 ausgerichtet, daß jeder Mündung 72a eines Rohres 72 eine

Hülse 76 gegenübersteht. Die Hülsen 76 sind in dieser Phase so weit wie möglich in die Haltekörper 74 eingezogen. Wenn alle Hülsen 76 mit Borstenbündeln 73 versorgt sind, fährt der Beschickungsteil 71 aus dem Halteteil 70 heraus. Der herausgefahrene Zustand ist in Fig. 8 dargestellt. Stattdessen fährt eine Heizeinrichtung 79 in den Halteteil 70 ein. Alle Hülsen 76 werden nun mittels der Druckmittelzylinder 77 ausgefahren, wodurch die vorderen Enden der Borstenbündel 73 mit dem Heizelement 79 in Berührung kommen und die Borstenbündel plastifiziert werden. Nach der Plastizifierung können die Hülsen 76 wieder in die Haltekörper 74 eingefahren werden, wonach ein Bürstenkörper, der an den vorgesehenen Ansatzstellen für Borstenbündel plastifiziert ist, an die Stelle des Heizelementes 79 eingefahren wird. Danach werden die an ihren vorderen Verbindungsenden 76a noch plastischen Borstenbündel mit den plastifizierten Stellen des Bürstenkörpers durch Andrücken verschweißt, zu welchem Zwecke die Hülsen 76 wieder ausgefahren werden.

Der Borstenbündelhalter 25 nach Fig. 4 kann entsprechend den Fig. 7 und 8 beschaffen sein.

Nachfolgend wird bei der Beschreibung der Maschine nach Fig. 2 bereits erwähnte Verteilerblock 2' anhand der Fig. 9 und 10 beschrieben. Der Verteilerblock 2' hat ein Gehäuse 80, in dem sich mehrere vertikale Schächte 61 befinden. Die Breite der Schächte 81 ist nur wenig größer als der Durchmesser von Bürstenbündeln 13. Die Schächte 81 sind nach oben hin offen. Längs der oberen Wand 80a des Gehäuses 80 ist ein trichterförmiges Magazin 1' verfahrbar und kann mit einer unteren Öffnung 82 auf die Schächte 81 ausgerichtet werden, wobei die Borstenbündel in den jeweils unter der Öffnung 82 befindlichen Schacht fallen.

Am unteren Ende jedes Schachtes 61 befindet sich eine Bohrung 83, die das Gehäuse 80 vollständig durchgreift (siehe Fig. 9). In jeder Bohrung 83 ist ein Stempel 84 verschiebbar. Alle Stempel sind durch eine Traverse 85 miteinander verbunden. In jedem Stempel 84 befindet sich ein Kanal 86.

An der Ausgangsseite des Gehäuses 80 befindet sich ein Messer 87, das entsprechend dem Pfeil 88 vertikal beweglich ist. Das Messer 47 kann in einen Spalt 89 eintauchen, der sich zwischen dem Gehäuse 80 und Führungshülsen 90 befindet. An die Führungshülsen 90 schließen mit einem gewissen Abstand die Leitungen 2' an. In einen Zwischenraum zwischen den Führungshülsen 90 und den Leitungen 2' können Heizelemente 91, 92 eintauchen.

Die Borstenbündel 13, die sich im Magazin 1' und in den Schächten 81 befinden, sind an beiden Enden verschweißt,wodurch ein Auseinanderklaffen der Borsten verhindert und dadurch die Handhabung der Borstenbündel wesentlich erleichtert wird.

Wenn Borstenbündel ausgestoßen werden sollen, werden die Stempel 84 gleichzeitig von links her in die Bohrungen 83 eingestoßen und schieben dabei Borstenbündel 13 gegen die in die Heizstellung eingefahrenen Heizelemente 91, 92. Dadurch wird das vordere Verbindungsende 13a plastifiziert. Gleichzeitig fährt das Messer 87 nach unten und schneidet das hintere verschweißte Ende der Borstenbündel 13 ab, so daß die Borsten an diesem Ende nicht mehr miteinander verbunden sind.

Nach Auswärtsbewegung der Heizelemente 91, 92 entsprechend den Pfeilen 93, 94 erfolgt die weitere Förderung der Borstenbündel durch Einblasen von Förderluft über den Kanal 86. Die Borstenbündel werden so rasch zum Bürstenkörper befördert, daß die Verbindungsenden 13a noch plastisch sind, wenn die Borstenbündel an den Bürstenkörper 12 anstoßen. In diesem Falle werden also die Borstenbündel bereits vor dem Transport zum Borstenbündelhalter 4' bzw. 4 plastifiziert, während bei den Ausführungsformen nach den Fig. 4 und 7, 8 die Plastifizierung erfolgt, nachdem die Borstenbündel sich bereits im Borstenbündelhalter befinden.

Vorstehend wurden Maschinen beschrieben, mit denen Borstenbündel an vorgefertigte Bürstenkörper angesetzt werden. Nachfolgend werden anhand der Fig. 11 bis 19 Maschinen beschrieben, mit denen der Bürstenkörper in der Bürstenherstellmaschine selber jeweils aus formbarem Werkstoff hergestellt wird.

Fig. 11 zeigt in schematischer und teilweiser Darstellung eine Spritzgußform zum Herstellen von Bürsten. Die insgesamt mit 95 bezeichnete Spritzgußform hat Formenteile 96, 97, die zusammen einen Formhohlraum 98 einschließen. Der Formhohlraum 98 kann durch Entfernung der Formenteile 97, 98 voneinander geöffnet werden. Die Trennebene zwischen den Formenteilen 96, 97 ist mit 99 bezeichnet.

Im Formenteil 97 befinden sich zahlreiche Bohrungen 100 für die Aufnahme von Borstenbündeln 101. Im Formenteil 97 ist auch ein Schieber 102 mittels eines doppeltwirkenden Druckmittelzylinders 103 verschiebbar, der über Leitungen 104 und 105 mit Druckmittel beaufschlagbar ist. In dem Schieber 54 befinden sich wiederum viele Bohrungen 106, die mit ihren an der Schieberseite 102a befindlichen Mündungen auf die Bohrungen 100 ausrichtbar sind. Im Formenteil 97 befinden sich weitere Bohrungen 107, die in den Hohlraum 108 einmünden, in dem der Schieber 102 bewegbar ist. Die Bohrungen 106 sind auch auf die Bohrungen 107 ausrichtbar, so daß die Bohrungen 107, 106 und 100 zusammen fortlaufende Kanäle bilden.

Die Maschine hat eine Anschlußplatte 109, an die Rohrleitungen 110 herangeführt sind. In der Anschlußplatte 109 befinden sich Bohrungen 111, die auf die Bohrungen 107 im Formenteil 97 ausgerichtet sind.

Zu der Maschine gehört auch ein Verteilerblock 2', der gleich ausgebildet ist, wie anhand der Fig. 3 und 4 beschrieben und der nur vereinfacht dargestellt ist. In Fig. 2 ist die Traverse 85 sichtbar, die im Zusammenhang mit Fig. 9 bereits erwähnt wurde. In die Fig. 11 und 12 sind einige Bezugszahlen eingetragen, die auch in den Fig. 9 und 10 erscheinen.

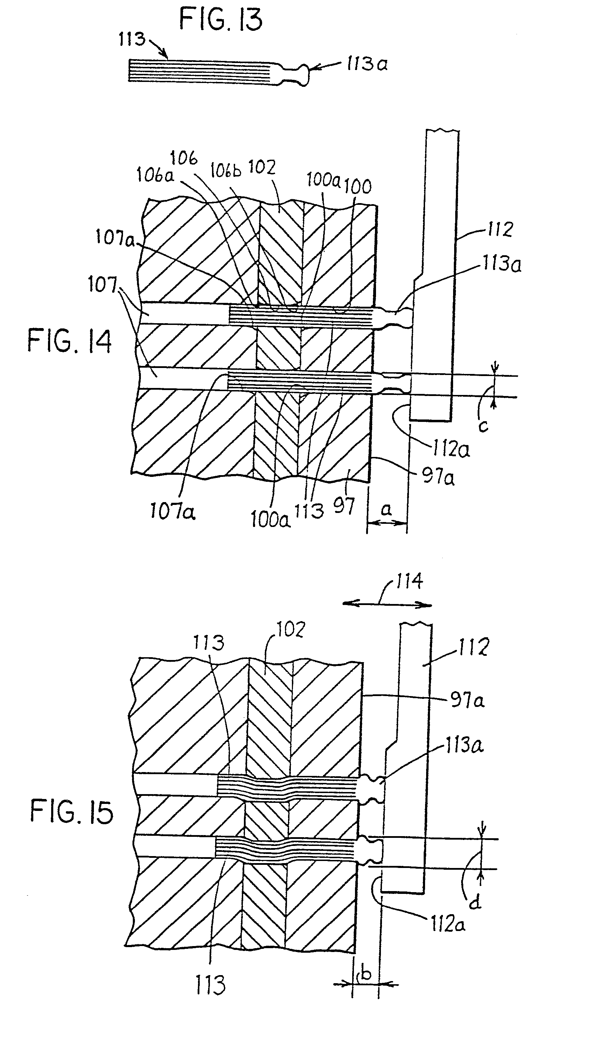

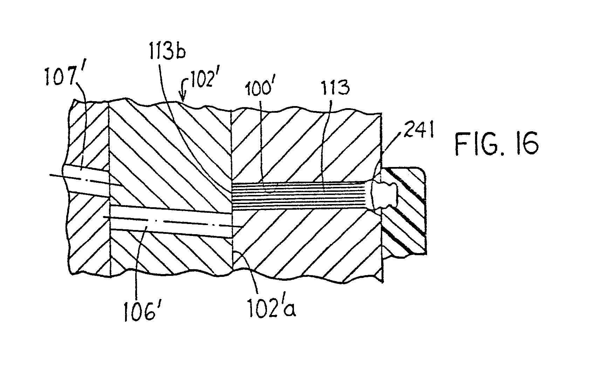

Zur Maschine gehört auch ein Anschlagschieber 112, der nachfolgend anhand der Fig.14 und15 hinsichtlich seiner Funktion betrachtet werden soll. Der Anschlagschieber 112 ist bei geöffneter Form, bei der die Formenteile 96 und 97 einen Abstand voneinander haben, zwischen die Formenteile einfahrbar. Der Anschlagschieber hat eine Anschlagfläche 112a, an der Borstenbündel 113 zur Anlage kommen können. Der Anschlagschieber ist auch in Richtung des Doppelpfeiles 114 bewegbar, wodurch der Abstand der Anschlagfläche 112a von dem Formenteil 97 verändert werden kann, worauf bei der Beschreibung der Funktion der Maschine noch eingegangen werden wird.

Die Spritzgußmaschine, in die das Werkzeug eingesetzt ist, ist in Fig. 11 nicht dargestellt. Gezeigt ist eine Form-Aufspannplatte 115 und Abstandshalter 116, 117, die die Form im Abstand von der Aufspannplatte 115 halten, um Raum für die Einführung der Rohrleitungen 110 zu schaffen.

Die Maschine arbeitet wie folgt. Bei geöffneter Form wird der Anschlagschieber 112 in die Lage relativ zum Formenteil 97 gebracht, die in Fig. 14 dargestellt ist. Die Anschlagfläche 112a hat von der Fläche 97a des Formenteiles 97 einen Abstand a. Der Schieber 102 befindet sich in einer solchen Lage, daß seine Bohrungen 106 auf die Bohrungen 107 und 100 ausgerichtet sind, wie in den Fig. 11 und 14 dargestellt. Die in die Form einzubringenden Borstenbündel 113 haben die in Fig. 13 dargestellte Form mit einem verschweißten Verbindungsende 113a, dessen Durchmesser nicht größer ist als der Durchmesser des Borstenbündels im übrigen. Das Verbindungsende 113a ist pilzförmig ausgebildet, wobei der Pilzkopf einen Durchmesser hat, der etwa gleich dem Borstenbündeldurchmesser im übrigen ist. Die Borstenbündel werden bis zum Anschlag an die Anschlagfläche 112a bewegt. Danach werden die Borstenbündel festgeklemmt, zu welchem Zweck der Schieber 102 in die Lage nach Fig. 15 mit Hilfe des Druckmittelzylinders 103 verschoben wird. Damit hierbei ein Abscheren der Borstenbündel 113 nicht stattfindet, sind an den Bohrungen 107 Schrägflächen 107a, an den Bohrungen 106 Schrägflächen 106a und 106b und an den Bohrungen 100 Schrägflächen 100a angeordnet. Nach dem Klemmen wird der Schieber 112a in Richtung der Fläche 97a bewegt, wobei der Abstand zwischen der Anschlagfläche 112a und der Formenfläche 97a auf das Maß b verringert wird. Hierbei werden die Verbindungsenden 113a der Borstenbündel aufgestaucht, wie dies aus einem Vergleich der Fig.14 und 15 ohne weiteres ersichtlich ist. Der Durchmesser der Verbindungsenden 113a wird vom Maß c auf das Maß d vergrößert. Hierbei findet eine gute Abdichtung der an der Formenfläche 97a liegenden Mündungen der Bohrungen 100 statt.

Die Verbindungsenden 113a der Borstenbündel können noch plastisch sein, wenn sie am Verteilerblock 2' so erhitzt wurden, wie dies anhand der Fig. 9 beschrieben wurde. Es kann jedoch auch der Anschlagschieber 112 beheizbar sein, so daß die Plastifizierung erfolgt, wenn die Borstenbündel bereits in die Form eingefahren und festgeklemmt sind (Situation nach Fig. 15).

Nach dem Aufstauchen der Verbindungsenden 113a wird der Schieber 112 aus der Form herausgefahren und die Form wird geschlossen. Nun wird der Formhohlraum 98 mit thermoplastischem Kunststoff ausgespritzt, wobei ein Bürstenkörper entsteht, der auch die Verbindungsenden 113a der Borstenbündel 113 umhüllt. Wenn der Bürstenkörper 118 genügend erkaltet ist, wird die Form geöffnet und die fertige Bürste ausgeworfen.

Fig. 16 zeigt eine Alternative für die axiale Fixierung der Borstenbündel 113. In diesem Falle wird der hier mit 102' bezeichnete Schieber in eine solche Lage gebracht, daß seine Bohrungen 106' seitlich gegenüber den Anschlußbohrungen 107', 100' versetzt sind. Das Borstenbündel 113 liegt dann mit seinem hinteren Ende 113b gegen die Schieberfläche 102'a und wird dadurch am Ausweichen nach hinten gehindert.

Die Führungskanäle 100' haben in der Nähe ihrer Mündungen Erweiterungen 241,in die noch deformierbare Masse der Borstenbündel gedrückt wird,wodurch eine besonders gute Abdichtung entsteht.

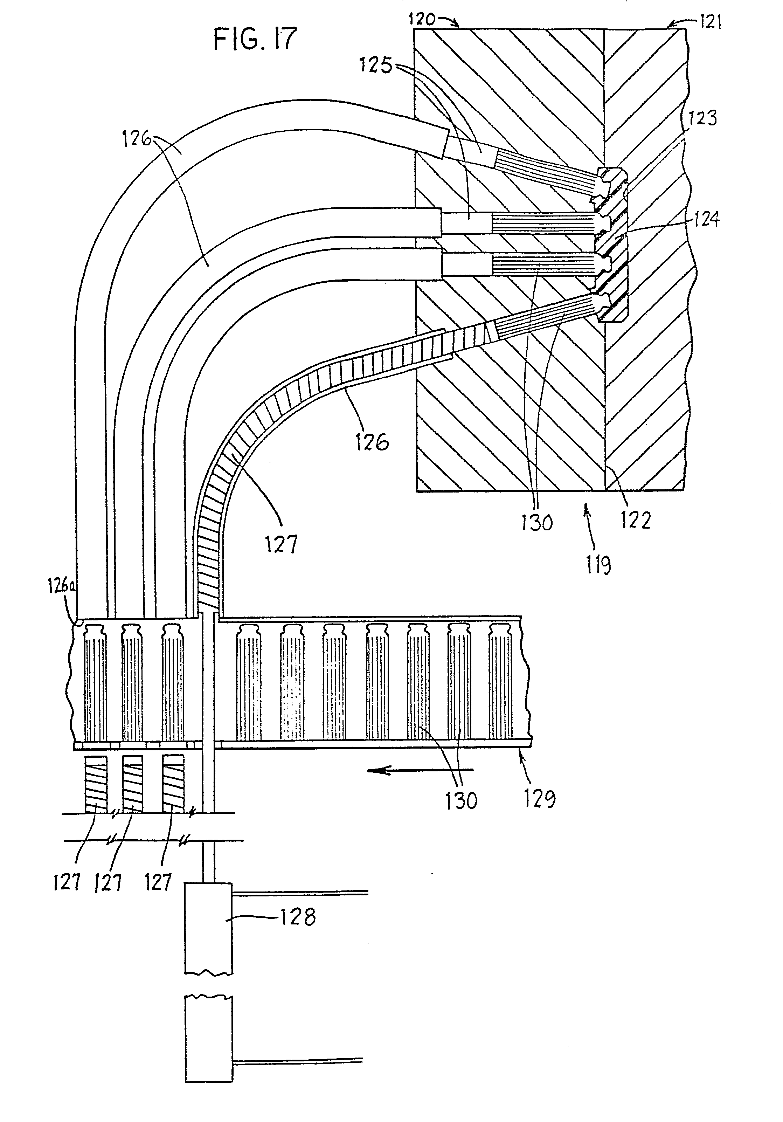

Fig. 17 zeigt ein weiteres Prinzip einer Maschine, mit der Bürstenkörper innerhalb einer Spritzgußform 119 hergestellt werden. Die Spritzgußform hat Formenteile 120 und 121, die rechtwinklig zur Teilungsebene 122 voneinander getrennt werden können. Die Formenteile 120, 121 begrenzen einen Formenhohlraum 123, in dem ein Bürstenkörper 124 geformt werden kann.

Im Formenteil 120 befinden sich Bohrungen 125, an die Rohrleitungen 126 anschließbar sind.

Jeder Rohrleitung 126 ist ein flexibler Schieber 127 zugeordnet, der mittels eines Druckmittelzylinders 128 in der zugeordneten Rohrleitung 126 bewegbar ist.Er kann auch vollständig aus der Rohrleitung herausgezogen werden. Die vollständig zurückgezogene Stellung ist am Beispiel von drei Schiebern 127 ebenfalls dargestellt.

In einem Magazin-Gurt 129 sind Borstenbündel 130 gehalten, die auf die Mündungen 126a der Leitungen 126 ausgerichtet werden können. Nach der Ausrichtung werden bei geöffneter Form die Schieber 27 vorbewegt und schieben die Borstenbündel 130 durch die Leitungen 126 in die Form 119. Dort kann wieder ein Schieber entsprechend dem Schieber 112 (Fig. 11 bis 15) vorgesehen sein, der die Einschiebtiefe begrenzt. In diesem Fall ist ein Festklemmen der Borstenbündel, wie in Fig. 15 dargestellt, oder das Vorschieben eines Anschlages, wie in Fig.16 dargestellt, nicht erforderlich, da die mechanischen Schieber 127 ein Zurückweichen der Borstenbündel 130 verhindern.

Die Fig., 18 und 19 zeigen eine Bürstenherstellmaschine, in der Bürstenkörper durch Ausschäumen von Kunststoff hergestellt werden. Ein wesentlicher Bestandteil der Maschine ist auch hier ein Spritzgußwerkzeug.

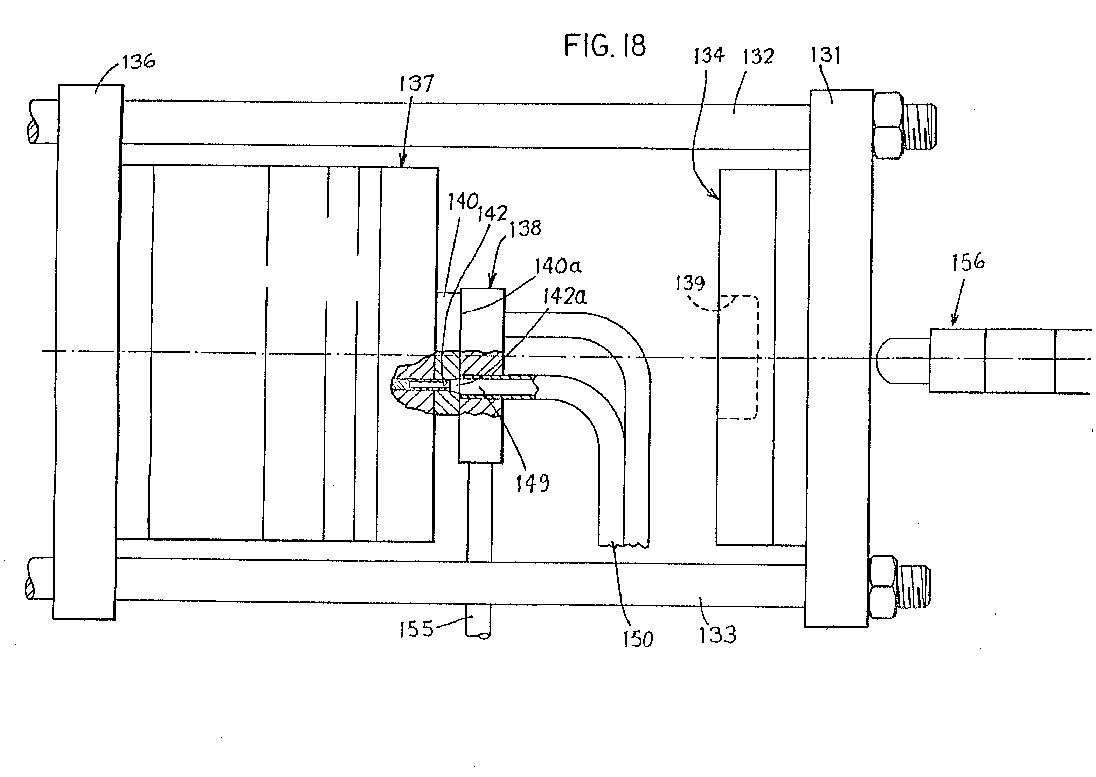

Die Maschine hat eine Traverse 131, mit der Führungsstangen 132, 133 verbunden sind. An der Traverse 131 ist ein erster Formenteil 134 einer insgesamt mit 135 bezeichneten Ausschäumform befestigt. Längs den Führungsstangen 132 ist eine Traverse 136 beweglich, an der ein zweiter Formenteil 137 der Ausschäumform 135 befestigt ist. Zwischen die Formenteile 134 und 137 ist ein Beschickungsblock 138 einfahrbar, wenn die Formenteile voneinander getrennt sind (Situation nach Fig. 18).

Der Formenteil 134 ist einfach ausgebildet. Er enthält lediglich eine Vertiefung 139. In die Vertiefung 139 kann eine sogenannte Tauchwand 140 nach Art eines Kolbens einfahren, wodurch das Volumen des Formenhohlraumes 141 veränderbar ist. Die Tauchwand 140 enthält Bohrungen 142 für die Aufnahme von Hülsen 151, in denen Borstenbündel 143 aufgenommen werden können. Die Hülsen 151 haben Köpfe 151a, die zwischen Platten 152 und 153 festgehalten sind.

Die Tauchwand 140 ist relativ zu den Platten 152, 153 bewegbar. Zu diesem Zweck ist die Tauchwand über Stangen 144 und eine Traverse 145 mit einem Kolben 146 verbunden, der innerhalb einer Zylinderbohrung 147 gleitbar ist. In die Zylinderbohrung 147 kann über einen Kanal 148 ein Druckmedium, vorzugsweise Hydrauliköl, eingeführt werden.

Die Platten 152, 153 sind mit einer weiteren Platte 154 verbunden, innerhalb der die Traverse 145 beweglich ist.

Im Beschickungsblock 138 sind viele Bohrungen 149 angeordnet. An jede dieser Bohrungen ist eine Rohrleitung 150 anschließbar. Die Anordnung der Bohrungen 149 stimmt überein mit der Anordnung der Bohrungen 142 in der Tauchwand 140. Am Beschickungsblock 138 befindet sich eine Stange 155, mit der der Beschickungsblock bewegbar ist, so daß er in die geöffnete Form eingefahren werden und aus der Form herausgefahren werden kann.

Zur Maschine gehört ein Einspritzkopf 156, mit dem ein thermoplastischer Kunststoff mit einem Schäum-Zusatz in den Formhohlraum 141 einspritzbar ist, die innerhalb des Formhohlraumes 141 miteinander reagieren, wobei ein Kunststoffschaum entsteht.

Die Maschine arbeitet wie folgt. Zunächst wird bei geöffneter Form (Situation nach Fig. 18) der Beschickungsblock 138 zwischen die Formenteile 134 und 135 eingefahren. Die Tauchwand befindet sich dabei in der vorgeschobenen Stellung,

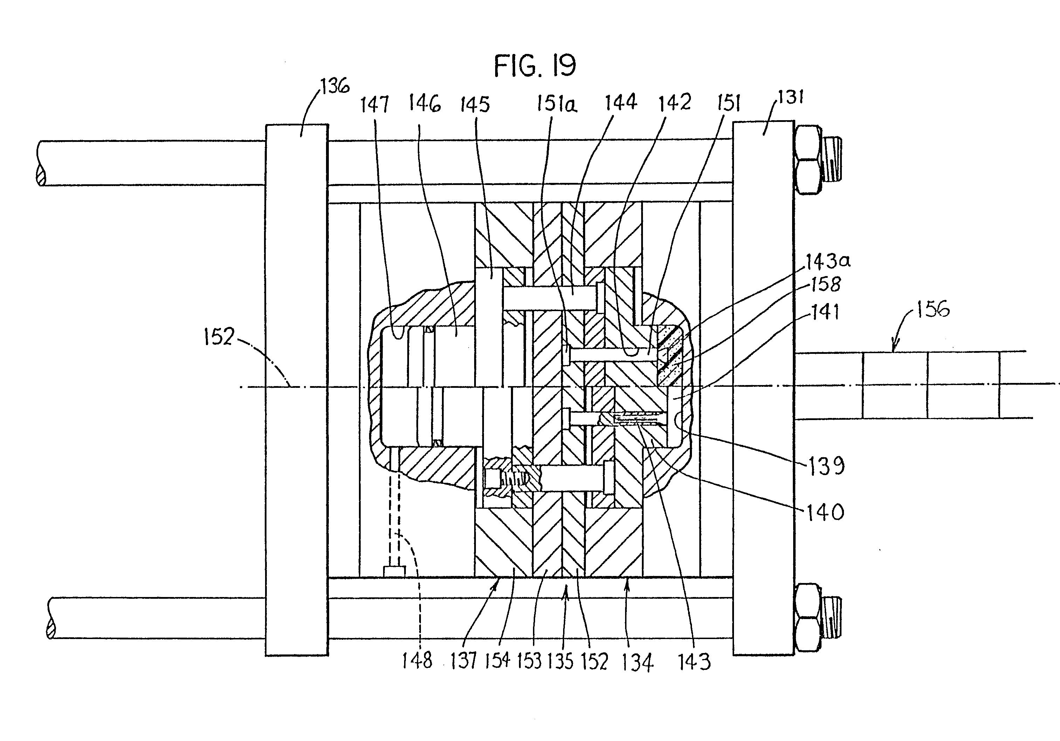

die in Fig. 19 unterhalb der Mittellinie 157 dargestellt
ist. Wenn alle Hülsen 151 mit Borstenbündeln 143 gefüllt
sind, wird der Beschickungsblock 138 aus der Form herausgefahren. Die Form wird nun geschlossen, zu welchem Zweck
die Traverse 136 mit den an ihr befestigten Bestandteilen
der Form in Richtung der feststehenden Traverse 131 gefahren wird. Nun wird der Einspritzkopf 156 an die Form 135
herangefahren und der Formhohlraum 141 wird mit den beiden
Kunststoffkomponenten, z.B. Polypropylen und Stickstoff
oder Kohlendioxid abspaltende Treibmittel gefüllt. Hierbei befindet sich die Tauchwand 140 zunächst noch in der
vorgeschobenen Stellung, die unterhalb der Mittellinie 157
dargestellt ist. Dadurch sind die Verbindungsenden 143a in
die Bohrungen 142 zurückgezogen. Der mit hoher Strömungsgeschwindigkeit einströmende noch plastische Kunststoff
kann deshalb die Borstenbündel nicht aus den Bohrungen
142 herausspülen. Wenn das Treibmittel zur Wirkung kommt,
entsteht ein Blähdruck, durch den die Tauchwand 140 in
die Stellung gedrückt wird, die in Fig. 19 oberhalb der
strichpunktierten Mittellinie 157 dargestellt ist. Während dieser Bewegung findet eine Strömung von Kunststoff
innerhalb der Form nicht mehr statt.

Wie Fig. 18 zeigt, sind die Bohrungen 142 in der Nähe ihrer
Mündungen an der Fläche 140a der Tauchwand 140 erweitert.
Der erweiterte Bereich ist mit 142a bezeichnet. Die zugeführten Borstenbündel 143 haben ein Verbindungsende 143a,
das sich ebenfalls zur Basisfläche hin erweitert. Dadurch
wird erreicht, daß die Verbindungsenden 143a vom Bürstenkörper 158 auch formschlüssig umfaßt sind.

Wenn der Bürstenkörper 158 genügend ausgehärtet ist, wird
die Form 135 geöffnet und die fertige Bürste ausgeworfen.

- 29 -

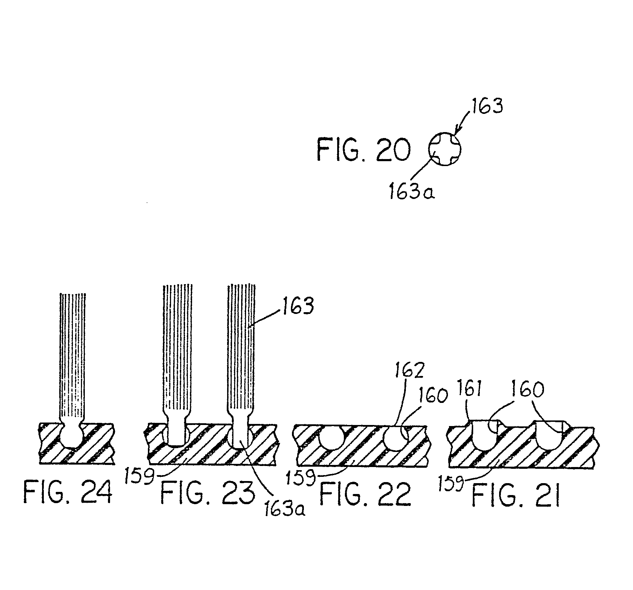

In den Fig. 20 bis 24 ist ein Verfahren dargestellt, bei dem wie folgt vorgegangen wird.

Verwendet werden vorgefertigte Bürstenkörper 159, in die Löcher 160 eingeformt sind. An den oberen Lochrändern befinden sich ringförmige Erhöhungen 161. In einem ersten Verfahrensschritt werden die Mündungen der Löcher 160 verengt, zu welchem Zweck der thermoplastische Kunststoff des Bürstenkörpers 159 erwärmt wird. Die Löcher 160 erhalten dadurch Mündungen 162, die wesentlich enger sind als die Lochquerschnitte unterhalb der Mündung 162. Durch die verengten Mündungen 162 werden Verbindungsenden 163a von Borstenbündeln 163 mit hoher Geschwindigkeit eingebracht. Die Verbindungsenden sind dabei noch plastisch, so daß beim Aufstoßen am Grunde der Löcher 160 die Verbindungsenden aufgestaucht werden und die Löcher 160 ausfüllen. Dieser Endzustand ist in Fig. 24 dargestellt.

Die Verbindungsenden 163a haben vorteilhafterweise den aus Fig. 20 ersichtlichen Querschnitt. Dieser Querschnitt hat den Vorteil, daß große Materialanhäufungen vermieden werden und dadurch eine schnelle Plastifizierung der Borstenbündel möglich ist, obwohl thermoplastischer Kunststoff eine nur geringe Wärmeleitfähigkeit hat.

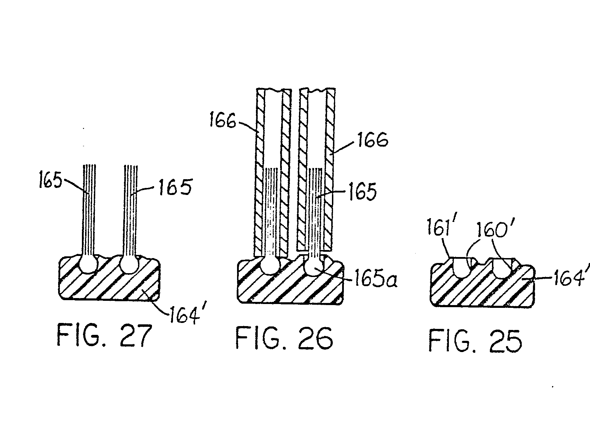

Die Fig. 25 bis 27 illustrieren eine Verfahrensvariante, bei der ebenfalls Bürstenkörper 164' verwendet werden, in denen sich Löcher 160' befinden. Im Gegensatz zu dem anhand der Fig. 20 bis 24 beschriebenen Verfahren jedoch werden die Borstenbündel 165 mit ihren Verbindungsenden 165a in die Löcher 160' eingeführt, bevor diese an ihren Mündungen verengt werden. Die Verengungen der Mündungen erfolgt nach dem Einstecken der Borstenbündel durch Reibungshitze. Zur Erzeugung der Reibungshitze werden Hülsen 166, über die die Borstenbündel zugeführt wurden, in rasche Drehung versetzt und gegen die ringförmigen Erhebungen 161' gedrückt, die die Löcher 160' umgeben. Der Endzustand ist dann ähnlich, wie bei dem Verfahren nach den Fig. 20 bis 24, d. h. die Borstenbündel sind formschlüssig im Bürstenkörper gefaßt. Bei dem Verfahren nach den Fig. 25 bis 27 können Borstenbündel 165 verwendet werden, deren Verbindungsenden 165a bereits so dick sind, daß sie die Löcher 160' im wesentlichen ausfüllen. Es ist auch nicht nötig, daß die Borstenbündel noch plastisch sind. Insbesondere ist es mit beiden Verfahren möglich, Borstenbündel mit Bürstenkörpern zu verbinden, wenn sich die Materialien der Borsten und die Materialien der Bürstenkörper nicht miteinander verschweißen lassen.

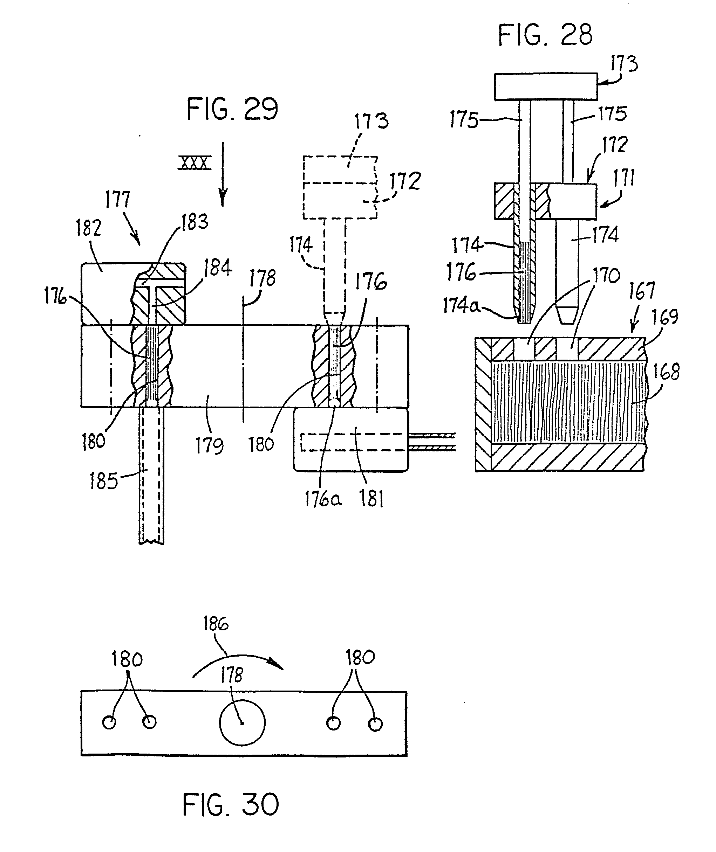

In den Fig. 28 bis 40 sind verschiedene Vorrichtungen zur Herstellung von Borstenbündeln dargestellt.

Die Vorrichtung nach den Fig.28 bis 30 hat ein Magazin 167 für bereits auf Länge zugeschnittene Borsten 168. In einer Wand 169 des Magazins 167 befinden sich mehrere Löcher 170, von denen in Fig.28 nur zwei dargestellt sind.

Dem Magazin 167 ist ein Borstenentnehmer 171 zugeordnet. Der Borstenentnehmer 171 hat einen Hülsenhalter 172 und einen Stempelhalter 173. Am Hülsenhalter 172 befinden sich viele Hülsen 174, die nach dem gleichen Muster angeordnet sind wie die Löcher 170 im Magazin 167. Die Hülsen 174 sind an ihren vorderen Enden 174a zugeschärft. Der Stempelhalter 173 ist mit vielen Stempeln 175 besetzt, die nach dem gleichen Muster angeordnet sind wie die Hülsen 174. Der Stempelhalter 173 ist relativ zum Borstenhalter 71 so verschiebbar, daß die Stempel 175 durch die Hülsen 174 geschoben werden können.

Zur Entnahme von Borstenbündeln wird der Hülsenhalter in Fig. 28 gesehen nach unten bewegt, wobei die Hülsen 174 durch die Bohrungen 170 in das Magazin 167 eindringen und die Hohlräume der Hülsen mit Borsten 168 gefüllt werden. Wenn die Hülsen 174 wieder aus dem Magazin herausgezogen werden, verbleiben die entnommenen Borstenbündel 176 in den Hülsen.

Zur weiteren Herstellung der Borstenbündel ist die insgesamt mit 177 bezeichnete Einrichtung vorgesehen. Diese Einrichtung hat einen um eine Achse 178 drehbaren Körper 179, in dem sich Aufnahmebohrungen 180 für Borstenbündel 176 befinden. Unterhalb des Körpers 179 ist ein Heizelement 181 angeordnet, das von unten an den Körper 179 anlegbar ist.

Diametral gegenüber dem Heizelement befindet sich ein Luftverteiler 182, in dem von einem Sammelkanal 183 Luft auf mehrere Kanäle 184 verteilt wird. Unterhalb des Körpers 179 und ebenfalls diametral gegenüber dem Heizelement 181 sind Rohrleitungen 185 angeordnet, die auf die Bohrungen 180 ausgerichtet sind.

Die Borstenherstellvorrichtung arbeitet wie folgt. Nach der bereits beschriebenen Entnahme von Borstenbündeln aus dem Magazin 167 wird der Borstenentnehmer 171 über den Körper 179 gefahren, wobei die Hülsen 174 auf die Bohrungen 180 ausgerichtet werden. Danach wird der Stempelhalter 143 an den Hülsenhalter 172 angenähert, wobei die Stempel 175 durch die Hülsen 174 hindurchbewegt und dabei die Borstenbündel 176 in die Bohrungen 180 gestoßen und gegen das Heizelement 181 gedrückt werden. Am Heizelement werden die Borsten miteinander verschmolzen, wobei Verbindungsenden 176a entstehen. Danach wird der Körper 179 entsprechend dem Pfeil 186 um 180° gedreht, wobei die mit Borstenbündeln 176 gefüllten Bohrungen 180 auf die Rohrleitungen 185 ausgerichtet werden. Durch Einblasen von Druckluft über die Kanäle 183, 184 werden die Borstenbündel 176 aus den Bohrungen 180 heraus in die Leitungen 185 gedrückt und dort durch Druckluft weitergefördert bis zu Bürstenherstellmaschinen, wie sie bereits beschrieben wurden.

Mit der Vorrichtung nach den Fig. 31 und 32 werden Borstenbündel hergestellt, deren Borsten an beiden Enden des Borstenbündels miteinander verbunden sind. Solche Borstenbündel lassen sich in einem Magazin besonders gut handhaben, worauf schon weiter oben hingewiesen wurde.

Die Vorrichtung nach den Fig. 31 und 32 hat wieder einen drehbaren Körper 187, in dem sich Bohrungen 188 für die Aufnahme von Borstenbündeln 189 befinden. Die Beschickung der Bohrungen 188 mit Bündeln aus noch nicht miteinander verbundenen Borsten kann in gleicher Weise erfolgen, wie dies anhand der Fig. 28 beschrieben wurde. Die in Fig. 31 gestrichelt dargestellten Hülsen sind deshalb in Übereinstimmung mit den Fig. 28 und 29 mit 174 bezeichnet. Der scheibenförmige Körper 187 wird mit Drehschritten von 120° gedreht, wobei die mit unverbundenen Borsten gefüllten Bohrungen 188 auf zwei Heizeinrichtungen 190 und 191 ausgerichtet werden. An den Heizeinrichtungen 190, 191 befinden sich Heizelemente 192 bzw. 193 die durch Bewegung der Heizeinrichtungen 191, 192 in Richtung der Pfeile 194,195 in die Bohrungen 188 eingesteckt werden können. Die Heizelemente verschmelzen die Borsten 189 miteinander, wodurch zwei Verbindungsenden 189a und 189b entstehen. Nach dem Verschmelzen der Borsten miteinander werden die Heizelemente wieder aus den Bohrungen 188 herausgezogen. Bei einem weiteren Drehschritt der Scheibe 187 gelangen die Borstenbündel in eine Auswerfstation 196. Solche Borstenbündel sind besonders gut für eine Magazinierung geeignet und können auch lose geschüttet gehandhabt werden.

Die Fig. 33 bis 37 zeigen eine Vorrichtung, mit der Borstenbündel von einem Strang abgeteilt werden.

Der Strang 197, aus dem Borstenbündel 198 hergestellt werden sollen, besteht aus einzelnen Borsten, die von großen Vorratsspulen abgezogen werden, die jedoch in der Zeichnung nicht dargestellt sind. Die Vorrichtung hat eine Transportzange 199, mit Schenkeln 199a und 199b, die mit einem
Gelenkbolzen 199c gelenkig miteinander verbunden sind. Die
Transportzange 199 ist mit einer in der Zeichnung nicht dargestellten Bewegungseinrichtung zwischen den Stellungen I
(dargestellt mit ausgezogenen Linien) und II (dargestellt
mit strichpunktierten Linien) bewegbar. Die Zangenschenkel
199a und 199b können mit einer ebenfalls nicht gezeigten
Einrichtung zusammengezogen werden (in Fig. 34 dargestellte
Situation), in der der Strang 197 festgeklemmt ist, und in
eine auseinandergeschwenkte Öffnungsstellung gebracht werden, in der der Strang freigegeben ist.

Zu der Vorrichtung gehört eine weitere Klemmeinrichtung 200,
die aus zwei Teilen 201 und 202 besteht. Diese Teile können
mit einer nicht gezeigten Bewegungseinrichtung so weit auseinandergefahren werden, daß die Transportzange zwischen
den beiden Teilen hindurchbewegt werden kann. Die beiden
Teile 201 und 202 bilden zusammen ebenfalls eine Klemmvorrichtung für ein abgeschnittenes Borstenbündel, wobei
sich die beiden Teile zu einer Hülse größerer Länge ergänzen (siehe Fig. 37). Die Klemmeinrichtung 200 ist um
Zapfen 203, 204 schwenkbar. Sie kann also sowohl eine zum
Strang 197 parallele Stellung (in Fig. 9 mit ausgezogenen
Linien gezeichnet) als auch in eine zum Strang 197 senkrechte Stellung gedreht werden (in Fig. 33 mit gestrichelten Linien gezeichnet).

Zu der Vorrichtung gehört auch ein Messer 205, das mit einer nicht gezeigten Bewegungsvorrichtung entsprechend dem
Doppelpfeil 206 bewegbar ist.

Ein weiterer Bestandteil der Borstenbündel-Herstellvorrichtung ist eine Form 207, die mit einem elektrischen Heizelement 208 beheizbar ist. Die Form 207 enthält einen Formhohlraum 209, der ein Negativ des gewünschten Verbindungsendes des Borstenbündels 198 ist.

Die Vorrichtung arbeitet wie folgt. Bei geöffneter Klemmeinrichtung 200 bewegt sich die Transportzange 199 von der Stellung I in die Stellung II, wobei die Zangenschenkel 199a, 199b geschlossen sind und den Strang 197 festklemmen. Dadurch wird der Strang 197 um einen Schritt nach links (in Fig. 33 gesehen) gezogen. Danach werden die Teile 201, 202 der Klemmeinrichtung 200 zusammengefahren und halten nun den Strang fest. Die Schenkel 199a, 199b werden nun soweit auseinandergeklappt, daß die Zange in die Position I zurückfahren kann, ohne mit der Klemmeinrichtung 200 zu kollidieren. Nachdem die Zange 199 wieder geschlossen ist, wird das Messer 205 gegen den Strang 197 bewegt und teilt von diesem ein Borstenbündel ab.

Danach schwenkt die Klemmeinrichtung 200 in die in Fig. 33 gestrichelt eingezeichnete Lage, in der das Borstenbündel 198 nach unten weist. Diese Stellung ist auch in Fig. 35 dargestellt, wobei jedoch die Blickrichtung parallel zum Strang 197 ist. Bei dieser Stellung der Klemmeinrichtung 200 schließt sich die aus den beiden Teilen 207a und 207b bestehende Form 207 um das untere Ende des Borstenbündels 198. Die Form wird erwärmt, wobei die Borsten geschmolzen werden und den Formhohlraum 209 ausfüllen. Nach genügender Verfestigung durch Abkühlung der Form 207 werden die Formteile 207a, 207b auseinandergefahren. Am Borstenbündel 198 befindet sich nun ein pilzförmiges Verbindungsende 198a. Das fertige Borstenbündel 198 wird in eine Rohrleitung 210 gefördert und zwar mittels eines Luftstromes, der mittels einer Düse 211 zugeführt wird. Die Leitung 210 ist eine Leitung der weiter oben beschriebenen Bürstenherstellmaschinen. Nachdem das Borstenbündel 198 aus der Klemmeinrichtung 200 entfernt ist, wird die Klemmeinrichtung wieder in ihre horizontale Lage geschwenkt und geöffnet, so daß sie wieder die Lage nach Fig. 10 einnimmt. Der beschriebene Vorgang wiederholt sich dann.

Die Funktion wurde am Beispiel der Herstellung eines einzigen Borstenbündels beschrieben. In der Praxis jedoch wird man mehrere solche Vorrichtungen parallel zueinander anordnen, so daß viele Borstenbündel gleichzeitig hergestellt werden können.

Die Fig. 38 bis 40 zeigen eine Vorrichtung zum Herstellen von Borstenbündeln durch Umspritzen der Befestigungsenden der Borstenbündel mit thermoplastischem Kunststoff.

Die Vorrichtung hat eine insgesamt mit 212 bezeichnete Spritzgußmaschine mit einer festen Traverse 213 und einer relativ zu dieser längs Führungsstangen 214 verschiebbaren beweglichen Traverse 216. An der festen Traverse 213 ist ein erster Formenteil 217 einer insgesamt mit 218 bezeichneten Spritzgußform befestigt. Der zweite Formenteil 219 ist aus der Spritzgußmaschine seitlich ausfahrbar. Er ist zu diesem Zweck an einer Stange 220 befestigt, die zu einem Verschiebemotor 221 geführt ist, z. B. einem Hydraulikzylinder.

Im ersten Formenteil 219 befinden sich viele kleine Vertiefungen 222. Im zweiten Formenteil befinden sich viele Bohrungen 223 für die Aufnahme von Borstenbündeln 224. Die Anordnung der Bohrungen 223 stimmt überein mit der Anordnung der Vertiefungen 222.

Zur Spritzgußmaschine gehört auch eine Einspritzeinheit 225, mit der flüssiger thermoplastischer Kunststoff in die geschlossene Form 218 eingespritzt werden kann.

Zur Vorrichtung gehört auch eine Befülleinrichtung 226 für die Befüllung des zweiten Formenteiles 219. Diese Befülleinrichtung kann gleich ausgebildet sein, wie die in Fig. 28 dargestellte Vorrichtung, weshalb für entsprechende Teile in Fig. 38 gleiche Bezugszahlen verwendet sind wie in Fig. 28.

Zur Abförderung fertiger Borstenbündel ist die in Fig. 40 gezeigte Einrichtung vorgesehen. An einen Block 227 sind viele Rohrleitungen 228 angeschlossen. Die Anordnung der Rohrleitungen stimmt überein mit der Anordnung der Bohrungen 223 im zweiten Formenteil 219.

Eine Übergabeeinrichtung 229 hat einen drehbaren Körper 230, an dem sich ein Luftverteiler 231 befindet. Der Luftverteiler enthält viele Bohrungen 232 für die Aufnahme fertiger Borstenbündel. In jede Bohrung 232 mündet eine Luftzuführbohrung 233, die von einem Sammelkanal 234 ausgeht.

Mit der Maschine nach den Fig. 38 bis 40 wird wie folgt gearbeitet.

Bei geöffneter Form 218, wobei sich die bewegliche Traverse 216 weiter links befindet als in Fig. 39 gezeichnet, ist der zweite Formenteil 219 aus der Spritzgußmaschine ausgefahren und auf die Befülleinrichtung 226 ausgerichtet. Nachdem mittels der Stempel 175 Borstenbündel 224 durch den zweiten Formenteil 219 hindurchgeschoben sind, verbleiben die Stempel 175 zunächst in ihrer Halteposition (in Fig. 38 oberhalb der strichpunktierten Linie 235 dargestellt). Die Borstenbündel ragen hierbei ein wenig über die Fläche 219a vor. Nun wird ein Heizelement 226 an die Fläche 219a angenähert, wobei die Borstenbündel an ihren herausragenden En-

den erwärmt werden. Der Formenteil 219 wird nun in die Spritzgußmaschine eingefahren, wobei die aus dem Formenteil 219 herausragenden Enden der Borstenbündel auf die Vertiefungen 222 ausgerichtet werden. Nach Schließen der Form ragen die Enden der Borstenbündel 224 in die Hohlräume 222. Nun wird die Einspritzeinheit 225 an die Spritzgußform angesetzt und die Hohlräume 222 werden mit thermoplastischem Kunststoff ausgespritzt. Nach genügender Aushärtung des Kunststoffes durch Abkühlung wird die Form geöffnet und der Formenteil 219 wird auf die Übergabeeinrichtung 229 ausgerichtet.

In der Übergabevorrichtung befindet sich ein Ausstoßer 237 mit Stempeln 238, deren Anordnung gleich ist wie die Anordnung der Bohrungen 223 im Formenteil 219. Die fertigen Borstenbündel, an denen sich angespritzte Köpfe 239 befinden, werden in die Bohrungen 232 des Luftverteilers 231 eingeschoben. Danach wird der drehbare Körper 230 entsprechend dem Pfeil 240 um 180° gedreht, wonach die Bohrungen 232 auf die Leitungen 228 im Block 227 ausgerichtet sind. Durch Einleiten von Druckluft über die Sammelbohrung 234 werden alle Borstenbündel 224 gleichzeitig aus dem Luftverteiler 231 ausgestoßen und in die Leitungen 128 gedrückt, die Bestandteile von Bürstenherstellmaschinen sind, wie sie weiter oben beschrieben wurden.

Mit einer Vorrichtung nach den Fig. 38 bis 40 können Borstenbündel aus Borsten hergestellt werden, deren Borsten sich nicht miteinander verschweißen lassen. Borstenbündel 224 sind auch dann vorteilhaft, wenn die Borsten aus einem Material bestehen, z.B. aus Polyamid, das sich mit dem Material des Bürstenkörpers, z.B. Polypropylen, nicht verschweißen läßt. In diesem Fall können die angespritzten Köpfe 239 aus dem Material des Bürstenkörpers bestehen, also z.B. aus Polypropylen, so daß eine Verschweißung mit dem Bürstenkörper möglich ist.

Ansprüche:

1. Verfahren zum Herstellen von Bürsten (7, 9), bei dem viele Borstenbündel (9), vorzugsweise alle Borstenbündel der Bürste (9, 7), zunächst durch Führungskanäle (3) in eine bestimmte Lage relativ zu einem Bürstenkörper (7) transportiert und anschließend daran gleichzeitig mit einem ihrer Enden (Verbindungsenden) mit dem Bürstenkörper (7) verbunden werden, dadurch gekennzeichnet, daß zuerst Borstenbündel (9) hergestellt werden, deren einzelne Borsten miteinander verbunden sind und daß die Borstenbündel (9) erst danach zum Bürstenkörper (7) transportiert und an diesem befestigt werden.

2. Verfahren nach Anspruch 1, dadurch gekennzeichnet, daß die Borsten der Borstenbündel (189) an beiden Enden (189a, 189b) der Borstenbündel (189) miteinander verbunden werden und daß die Borstenbündel (189) kurz vor oder nach ihrer Befestigung am Bürstenkörper am äußeren Nutzende innerhalb der Verbindungsstelle abgeschnitten werden (Fig. 9, 31).

3. Verfahren nach einem der vorhergehenden Ansprüche, dadurch gekennzeichnet, daß die Borsten aus thermoplastischem Kunststoff hergestellt und durch Verschweißen zu einem Borstenbündel (9) verbunden werden.

4. Verfahren nach Anspruch 3, dadurch gekennzeichnet, daß die Borstenbündel an ihren Befestigungsenden mit thermoplastischem Kunststoff (239) umspritzt werden (Fig. 38 bis 40).

5. Verfahren nach einem der vorhergehenden Ansprüche, dadurch gekennzeichnet, daß die Borstenbündel (9) mittels Druckluft durch die Führungskanäle (3) transportiert werden.

6. Verfahren nach einem der Ansprüche 1 bis 4, dadurch gekennzeichnet, daß die Borstenbündel (130) mechanisch durch die Führungskanäle (126) geschoben werden (Fig. 17).

7. Verfahren nach einem der vorhergehenden Ansprüche, dadurch gekennzeichnet, daß in an sich bekannter Weise der aus thermoplastischem Kunststoff bestehende Bürstenkörper (7) an den Ansatzstellen für Borstenbündel plastifiziert wird und die an ihren Befestigungsenden ebenfalls plastifizierten Borstenbündel (9) danach an die Ansatzstellen angedrückt werden.

8. Verfahren nach Anspruch 7, dadurch gekennzeichnet, daß die Borstenbündel (9) bei plastischem Zustand der Verbindungsenden auf den Bürstenkörper (7) aufgestoßen und dabei aufgestaucht werden.

9. Verfahren nach Anspruch 8, dadurch gekennzeichnet, daß die Aufstauchkraft dadurch dynamisch erzeugt wird, daß die Borstenbündel (9) mit hoher Geschwindigkeit an den ruhenden Bürstenkörper (7) heranbewegt und durch Aufprall auf den Bürstenkörper (7) abgebremst werden.

10. Verfahren nach Anspruch 7, dadurch gekennzeichnet, daß die Aufstauchkraft durch mechanisches Andrücken der Borstenbündel (64) an den Bürstenkörper (12) erzeugt wird
(Fig. 6).

11. Verfahren nach einem der Ansprüche 1 bis 6, dadurch
gekennzeichnet, daß die Borstenbündel (113) mit ihren Verbindungsenden (113a) in einen Formhohlraum (98) geführt
werden und daß danach der Bürstenkörper (118) in dem Formhohlraum (98) geformt wird, wobei der Bürstenkörper (118)
die Verbindungsenden (113a) der Borstenbündel (113) umfaßt
(Fig. 11 bis 16).

12. Verfahren nach Anspruch 11, dadurch gekennzeichnet,
daß zur Bildung des Bürstenkörpers (118) thermoplastischer
Kunststoff in den Formhohlraum (98) eingespritzt ist.

13. Verfahren nach Anspruch 11, dadurch gekennzeichnet,
daß zur Bildung des Bürstenkörpers (158) im Formhohlraum
(141) Kunststoff zur Ausschäumung gebracht wird (Fig. 18,
19).

14. Verfahren nach Anspruch 11, dadurch gekennzeichnet,
daß zur Bildung des Bürstenkörpers in den Formhohlraum
durch chemische Reaktion aushärtendes Gießharz eingebracht
wird.

15. Verfahren nach Anspruch 11, dadurch gekennzeichnet,
daß im Formhohlraum ein hohler Bürstenkörper geformt wird.

16. Verfahren nach Anspruch 15, dadurch gekennzeichnet,
daß der hohle Bürstenkörper im Blasformverfahren hergestellt wird.

17. Verfahren nach Anspruch 15, dadurch gekennzeichnet,
daß der hohle Bürstenkörper durch Tiefziehen einer Kunststoffolie hergestellt wird.

0149996

18. Verfahren nach einem der Ansprüche 11 bis 17, dadurch gekennzeichnet, daß zur Abdichtung des Formhohlraumes (98) die Verbindungsenden (113a) der Borstenbündel (113) vom Formhohlraum (98) aus unter Deformation der Verbindungsenden (113a) gegen die Mündungen von Führungskanälen (100) gepreßt werden (Fig. 14, 15).

18A. Verfahren nach Anspruch 18, dadurch gekennzeichnet, daß die Verbindungsenden der Borstenbündel (113) in Erweiterungen (241) gepreßt werden, die sich vor den Mündungsrändern der Führungskanäle (100') befinden.

19. Verfahren nach Anspruch 18, dadurch gekennzeichnet, daß die Borstenbündel (113) vor dem Andrücken der Verbindungsenden (113a) fixiert werden, z. B. durch Festklemmen (Fig. 14, 15).

20. Verfahren nach einem der Ansprüche 1 bis 6, dadurch gekennzeichnet, daß die Verbindungsenden (163a) der Borstenbündel (163) in Löcher (160) eines vorgefertigten Bürstenkörpers (159) eingeführt und danach ein Formschluß gegen Herausziehen geschaffen wird (Fig. 20 bis 27).

21. Verfahren nach Anspruch 20, dadurch gekennzeichnet, daß die Löcher (160') nach dem Einführen der Borstenbündel (165) an ihren Eintrittsmündungen verengt werden, z. B. durch Plastifizieren des Bürstenkörpermaterials und Verformung der Eintrittsmündungen (Fig. 25 bis 27).

22. Verfahren nach Anspruch 20, dadurch gekennzeichnet, daß die Borstenbündel (163) in unterschnittene Löcher (160) eingeführt und ihre Verbindungsenden (163a) in noch plastischem Zustand auf einen Durchmesser aufgestaucht werden, der größer ist als der Durchmesser der Loch-Eintrittsmündung (162) (Fig. 20 bis 24).

22A. Verfahren zum Herstellen von Bürsten, bei dem viele Borstenbündel mit ihren Verbindungsenden an einen Formhohlraum geführt werden und danach der Bürstenkörper in dem Formhohlraum geformt wird, dadurch gekennzeichnet, daß die Verbindungsenden der Borstenbündel vor dem Formen des Bürstenkörpers erwärmt werden, wobei die Borsten unter Bildung einer Verdickung der Borstenbündel miteinander verbunden werden.

23. Maschine zum Herstellen von Bürsten (7, 9) mit einer Heizreinrichtung (5) zum Plastifizieren von Bürstenkörpern (7) an Ansatzstellen für Borstenbündel (9), gekennzeichnet durch einen Verteilerblock (2), von dem starre und|oder flexible Rohrleitungen (3) für den Transport von Borstenbündeln (9) ausgehen und einen an die Form der herzustellenden Bürsten angepaßten Halter (4) (Borstenbündelhalter) für Borstenbündel (9), an den die Leitungen (3) herangeführt sind.

24. Maschine nach Anspruch 23, dadurch gekennzeichnet, daß der Borstenbündelhalter (4') einen starren Körper und in diesem axial bewegliche Düsen (10) aufweist, in denen die Borstenbündel während des Verbindens mit dem Bürstenkörper (12) gehalten werden (Fig. 2).

25. Maschine nach Anspruch 24, dadurch gekennzeichnet, daß jede axial bewegliche Düse (10) mit einem in einem Druckluftzylinder (41) bewegbaren Kolben (40) verbunden ist (Fig. 6).

26. Maschine nach einem der Ansprüche 24 und 25, dadurch gekennzeichnet, daß an jeder axial beweglichen Düse eine Spannzange (60) angeordnet ist, mit der die Borstenbündel (64) festklemmbar sind, wobei die Spannzange (60) vorzugsweise durch axiale Bewegung relativ zu feststehenden Druckflächen (58) betätigbar ist (Fig. 6).

27. Maschine nach einem der Ansprüche 23 bis 26, dadurch gekennzeichnet, daß der Borstenbündelhalter (78) zwei relativ zueinander bewegliche Hauptteile (70, 71) aufweist, wobei die Rohrleitungen (72) an einen ersten Hauptteil (71) angeschlossen sind und der andere (zweite) Hauptteil (70) Aufnahmebohrungen für Borstenbündel (73) aufweist, die auf die Rohrleitungen (72) ausrichtbar sind (Fig. 7, 8).

28. Maschine nach Anspruch 27, dadurch gekennzeichnet, daß am zweiten Hauptteil (70) Andrückeinrichtungen, vorzugsweise Pneumatikzylinder (77), angeordnet sind, mit denen die Aufnahmebohrungen enthaltende Bauteile (76) axial verschiebbar sind (Fig. 7, 8).

29. Maschine nach einem der Ansprüche 23 bis 28, gekennzeichnet durch mindestens ein Heizelement, das auf den Borstenbündelhalter (25) ausrichtbar ist und mit dem die Verbindungsenden von im Borstenbündelhalter (25) enthaltenen Borstenbündeln plastifizierbar sind (Fig. 4).

30. Maschine zum Herstellen von Bürsten mit einer Form (95) mit öffenbarem Formhohlraum (98) zum Herstellen von Bürstenkörpern (118) aus plastisch verformbarem Material und mit Öffnungen (100) in der Formwand, durch die Borstenbündel (98) einführbar sind, gekennzeichnet durch einen Verteilerblock (2'), von dem starre und|oder flexible Rohrleitungen (110) für den Transport von Borstenbündeln (113) ausgehen und einem einen Bestandteil der Form (95) bildenden Halter (109) (Borstenbündelhalter) für Borstenbündel (113), an den die Leitungen (110) herangeführt sind (Fig. 11).

31. Maschine nach Anspruch 30, dadurch gekennzeichnet, daß in die geöffnete Form (95) ein Anschlagschieber (112) für die Verbindungsenden (113a) der Borstenbündel (113) einfahrbar ist (Fig. 14, 15).

32. Maschine nach Anspruch 31, dadurch gekennzeichnet, daß zum Aufstauchen der Verbindungsenden (113a) der Borstenbündel (113) der Anschlagkörper (112) derart beweglich ist, daß sein Abstand (a, b) von der Formwand (98a) veränderbar ist (Fig. 14, 15).

33. Maschine nach Anspruch 32, gekennzeichnet durch einen Schieber (102) zum Festhalten der Borstenbündel (113) in ihrer in die Form (95) eingefahrenen Stellung (Fig. 14, 15).

34. Maschine nach Anspruch 33, dadurch gekennzeichnet, daß der Schieber (102') eine Anschlagfläche (102'a) für die Nutzenden der Borstenbündel (113) aufweist (Fig. 16).

35. Maschine nach Anspruch 33, dadurch gekennzeichnet, daß der Schieber (102) von den Borstenbündeln (113) durchgriffene Bohrungen (106) enthält, die in einer Durchgangsstellung auf Bohrungen (107, 100) in der Form (95) ausrichtbar und gegenüber diesen Bohrungen (107, 100) seitlich versetzbar sind (Fig. 14, 15).

36. Maschine nach einem der Ansprüche 30 bis 35, insbesondere für die Herstellung von Bürsten mit Bürstenkörpern (158) aus aufgeschäumtem Kunststoff, gekennzeichnet durch eine Tauchwand (140) für die teilweise Begrenzung des Formhohlraumes (141), mit Hülsen (151) für die Aufnahme von Borstenbündeln (143), wobei in einer Ausgangsstellung, die während der Füllung der Form (135) eingenommen wird, die Borstenbündel (143) in der Tauchwand (140) versenkt sind, während in einer Endstellung, die beim weiteren Formungsvorgang eingenommen wird, z. B. während des Aufschäumens, die Verbindungsenden (143a) der Borstenbündel (143) aus der Tauchwand (140) herausragen (Fig. 18, 19).

37. Maschine nach einem der Ansprüche 30 bis 36, dadurch gekennzeichnet, daß im Bereich außerhalb der Form ein Schieber (Aufnahmeschieber) für die Aufnahme von Borstenbündeln angeordnet ist, der in die Form einfahrbar ist und der mit in ihm befindlichen Aufnahmebohrungen auf die Rohrleitungen für die Borstenbündel ausrichtbar ist.

38. Maschine nach Anspruch 37, gekennzeichnet durch mehrere Formen auf einer Bewegungseinrichtung, z. B. einem Drehtisch, die nacheinander auf den Aufnahmeschieber ausrichtbar sind.

39. Maschine nach einem der Ansprüche 23 bis 38, dadurch gekennzeichnet, daß der Verteilerblock (2') Ausstoß-Hohlräume (83) für Borstenbündel (13) aufweist, wobei jedem Ausstoß-Hohlraum (83) ein Vorratsraum (81) für Borstenbündel (13) zugeordnet ist und an jeden Ausstoß-Hohlraum (83) eine Rohrleitung (3') angeschlossen ist (Fig. 9, 10).

40. Maschine nach Anspruch 39, dadurch gekennzeichnet, daß jedem Ausstoß-Hohlraum (83) ein Ausstoßstempel (84) zugeordnet ist, der vorzugsweise einen durchgehenden Luftkanal (86) für die Zuführung von Ausstoß-Preßluft enthält (Fig. 9).

41. Maschine nach einem der Ansprüche 39 und 40, gekennzeichnet durch ein Magazin (1') für Borstenbündel (13), das längs dem Verteilerblock (2') beweglich ist, wobei der Magazinraum an die Vorratsräume (81) anschließbar ist (Fig. 9, 10).

42. Maschine nach einem der vorhergehenden Ansprüche, dadurch gekennzeichnet, daß am Ausgang des Verteilerblockes (2') Heizelemente (91, 92) für die Plastifizierung der Verbindungsenden der Borstenbündel (13) angeordnet sind (Fig. 9).

43. Maschine nach einem der Ansprüche 23 bis 42, dadurch gekennzeichnet, daß am Ausgang des Verteilerblockes eine Abschneidevorrichtung (87) zum Abschneiden von Borstenbündeln angeordnet ist, die an ihren Nutzenden miteinander verbundene Borsten aufweisen (Fig.9).

44. Maschine nach einem der vorhergehenden Ansprüche, gekennzeichnet durch in den Rohrleitungen bewegliche Schieber (127) zum Verschieben und eventuell Andrücken der Borstenbündel (130) (Fig. 17).

45. Maschine nach Anspruch 44, dadurch gekennzeichnet, daß jeder Schieber (34) über einen Abzweigungsstutzen (32a) in die Rohrleitung (32) eingeführt ist, wobei der Schieber (34) in seiner zurückgezogenen Stellung hinter der Einmündungsstelle des Abzweigungsstutzens (32a) liegt (Fig. 5).

46. Maschine nach Anspruch 45, dadurch gekennzeichnet, daß die Rohrleitung (32) ab der Einmündungsstelle des Abzweigungsstutzens (32a) gerade ausgebildet ist und der Schieber (34) ein starrer gerader Stift ist (Fig. 5).

47. Maschine nach einem der Ansprüche 44 und 45, dadurch gekennzeichnet, daß die Schieber (127) biegsam sind (Fig. 17).

48. Maschine nach einem der Ansprüche 23 bis 47, gekennzeichnet durch mindestens eine Vorrichtung zur Herstellung von Borstenbündeln (Fig. 29 bis 38).

49. Maschine nach Anspruch 48, gekennzeichnet durch ein Borstenmagazin (167) für auf Länge geschnittene Borsten (168), Entnahmehülsen (174) für Borstenbündel (176), die durch Löcher (170) in das Magazin (167) einführbar sind und eine Verbindungsstation mit Heizelement (181) zum Anschmelzen mindestens eines Endes (176a) des Borstenbündels
(176) (Fig. 28 bis 30).

50. Maschine nach Anspruch 49, gekennzeichnet durch eine
Abgabestation (177) für fertige Borstenbündel (176) (Fig.
28 bis 30).

51. Maschine nach den Ansprüchen 49 und 50, dadurch gekennzeichnet, daß die Borstenbündel (176) mittels eines drehbaren oder verschiebbaren Haltekörpers (179) von der Verbindungsstation in die Abgabestation (177) bewegbar sind,
wobei in der Verbindungsstation Bohrungen (180) im Haltekörper (179) auf mindestens ein Heizelement (181) und in
der Abgabestation auf Rohrleitungen (185) und Fördereinenrichtungen, z.B. Druckluftkanäle (184), ausgerichtet sind
(Fig. 29).

52. Maschine nach Anspruch 48, gekennzeichnet durch eine
Abzugsvorrichtung (199) zum Abziehen eines Stranges (197)
aus Borsten von Vorratsspulen, eine Schneideinrichtung
(205) zum Abschneiden von Borstenbündeln (198) vom Strang
(197) und eine Erwärmungsvorrichtung (207) zum Verschweissen der abgeschnittenen Borstenbündel (198) an mindestens
einem Ende (198a) (Fig. 33 bis 37).

53. Maschine nach Anspruch 52, gekennzeichnet durch eine
schwenkbare Halterung (200) für abgeschnittene Borstenbündel (198), mit der diese auf Rohrleitungen (210) für die
Weiterförderung der Borstenbündel (198) ausrichtbar sind.
(Fig. 33 bis 37).

54. Maschine nach Anspruch 48, gekennzeichnet durch eine
Gießform (218), vorzugsweise eine Spritzgußform für thermoplastischen Kunststoff, mit mehreren kleinen Hohlräu-

FIG. I

FIG. 2

FIG. 3

FIG. 4

FIG. 5

FIG. 6

3/17

0149996

0149996

FIG. 7

FIG. 8 {

FIG. 11

FIG. 12

FIG. 13

FIG. 14

FIG. 15

FIG. 16

FIG. 17

FIG. 18

FIG. 19

FIG. 20

163

163a

FIG. 24    FIG. 23    FIG. 22    FIG. 21

163

162    160 161 160

159    159    159

163a

FIG. 27

FIG. 26

FIG. 25

0149996

## FIG. 28

## FIG. 29

## FIG. 30

15/17

0149996

FIG. 31

FIG. 32

16/17

0149996

FIG. 33

FIG. 34

FIG. 37

FIG. 36

FIG. 35

17/17

0149996

FIG. 40

FIG. 39

FIG. 38